(19) Europäisches Patentamt / European Patent Office / Office européen des brevets

(11) **EP 3 892 463 B1**

(12) **EUROPEAN PATENT SPECIFICATION**

(45) Date of publication and mention
of the grant of the patent:
**05.11.2025 Bulletin 2025/45**

(21) Application number: **19893482.0**

(22) Date of filing: **05.12.2019**

(51) International Patent Classification (IPC):
**B32B 27/00** (2006.01)   **B32B 27/20** (2006.01)
**B32B 27/32** (2006.01)   **B65D 65/40** (2006.01)
**C08J 7/04** (2020.01)   **C09D 175/04** (2006.01)
**C09D 201/00** (2006.01)   **C09D 7/61** (2018.01)
**B32B 15/08** (2006.01)   **B32B 15/20** (2006.01)
**B32B 27/08** (2006.01)   **B32B 27/24** (2006.01)
**B32B 27/26** (2006.01)   **B32B 27/30** (2006.01)
**B32B 27/34** (2006.01)   **B32B 27/36** (2006.01)
**B32B 27/40** (2006.01)

(52) Cooperative Patent Classification (CPC):
(C-Sets available)
**C08J 7/048; B32B 7/12; B32B 15/08; B32B 15/20;
B32B 27/08; B32B 27/16; B32B 27/18;
B32B 27/20; B32B 27/24; B32B 27/26;
B32B 27/281; B32B 27/30; B32B 27/302;
B32B 27/306; B32B 27/308;**          (Cont.)

(86) International application number:
**PCT/JP2019/047543**

(87) International publication number:
**WO 2020/116544 (11.06.2020 Gazette 2020/24)**

(54) **GAS BARRIER FILM**

GASBARRIERENFILM

FILM BARRIÈRE AU GAZ

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **05.12.2018   JP 2018228408
02.09.2019   JP 2019159373**

(43) Date of publication of application:
**13.10.2021 Bulletin 2021/41**

(73) Proprietor: **Toppan Printing Co., Ltd.
Tokyo 110-0016 (JP)**

(72) Inventors:
• **KAMINAGA, Junichi
Tokyo 110-0016 (JP)**
• **SUZUKI, Seiya
Tokyo 110-0016 (JP)**

• **TAKEI, Ryo
Tokyo 110-0016 (JP)**
• **HOSHI, Sayaka
Tokyo 110-0016 (JP)**
• **NISHIKAWA, Takeshi
Tokyo 110-0016 (JP)**
• **FUKUGAMI, Miki
Tokyo 110-0016 (JP)**
• **TANAKA, Ayumi
Tokyo 110-0016 (JP)**

(74) Representative: **Hoffmann Eitle
Patent- und Rechtsanwälte PartmbB
Arabellastraße 30
81925 München (DE)**

(56) References cited:
**EP-A1- 3 858 612          WO-A1-2015/163450
WO-A1-2016/158794          WO-A1-2016/167181
WO-A1-2019/088265          JP-A- 2004 130 811**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

JP-A- 2004 130 811     JP-A- 2004 130 812
JP-A- 2004 130 812     JP-A- 2006 159 801
JP-A- 2006 159 801     JP-A- 2013 237 188
JP-A- 2013 237 188     JP-A- 2017 071 693
JP-A- 2017 202 624     JP-A- 2018 024 212
US-A1- 2017 009 034

(52) Cooperative Patent Classification (CPC): (Cont.)
**B32B 27/32; B32B 27/34; B32B 27/36;
B32B 27/365; B32B 27/40; C08G 18/0823;
C08G 18/0866; C08G 18/3206; C08G 18/3271;
C08G 18/348; C08G 18/724; C08G 18/757;
C08G 18/7642; C08G 18/8048; C09D 5/00;
C09D 7/61; C09D 129/04; C09D 175/12;**
B32B 2250/02; B32B 2250/03; B32B 2250/24;

B32B 2255/10; B32B 2255/20; B32B 2255/26;
B32B 2255/28; B32B 2264/00; B32B 2264/0235;
B32B 2264/025; B32B 2264/0264; B32B 2264/10;
B32B 2264/102; B32B 2264/105; B32B 2264/12;
B32B 2270/00; B32B 2307/30; B32B 2307/31;
B32B 2307/518; B32B 2307/54; B32B 2307/546;
B32B 2307/558; B32B 2307/581; B32B 2307/5825;
B32B 2307/7166; B32B 2307/7244;
B32B 2307/7246; B32B 2307/732; B32B 2307/746;
B32B 2439/70; B32B 2439/80; C08J 2323/12;
C08J 2475/04; C08K 3/34; C08K 3/346; C08K 5/29;
C08K 7/00

C-Sets
**C09D 129/04, C08K 13/04**

**Description**

[Technical Field]

[Background Art]

Packaging materials used for packaging food products or pharmaceutical products are required to have properties preventing entry of gases (water vapor, oxygen, etc.) that deteriorate the contents, i.e., are required to have gas barrier properties, to protect the contents from deterioration, decay, and retain the functions and nature of the contents. Therefore, these packaging materials use films having gas barrier properties (gas barrier films).

As gas barrier films, there are known films in which a gas barrier layer made of a material having gas barrier properties is provided on the surface of a resin substrate. As such gas barrier layers, there are known metal foils, vapor-deposited metal films, or coating films formed using wet coating methods. As the coating films formed using wet coating methods, there are known resin films or inorganic laminar mineral composite resin films as films exhibiting oxygen barrier properties (PTL 1). The resin films are formed of a coating agent containing a water-soluble polymer and a resin such as polyvinylidene chloride. The inorganic laminar mineral composite resin films are formed of a coating agent containing a water-soluble polymer and an inorganic laminar mineral.

Furthermore, as such gas barrier layers, there has been proposed a gas barrier layer sequentially including a vapor-deposited inorganic oxide film and a gas barrier composite coating containing an aqueous polymer, inorganic laminar compound, and metal alkoxide (PTL 2), or a gas barrier layer containing a polyvalent metal salt of a carboxylic acid which is a reaction product of a carboxyl group of a polycarboxylic acid polymer with a polyvalent metal compound (PTL 3).

[Citation List]

[Patent Literature]

[PTL 1] JP 6176239 B
[PTL 2] JP 2000-254994 A
[PTL 3] JP 4373797 B

JP2006159801 provides a gas barrier laminate that is suitable as a packaging material and exhibits stable gas barrier properties and moisture-resistant adhesion even when stored for a long time under high humidity conditions.

[Summary of the Invention]

[Technical Problem]

Gas barrier films including a resin substrate whose surface is provided with a coating film obtained such as through a wet coating method, vapor deposition method, or sputtering method have often suffered from unstable oxygen barrier properties, depending on the production lot. Specifically, this type of gas barrier film has often exhibited oxygen barrier properties which are inferior to the intrinsic oxygen barrier properties assumed from the material forming the coating film and the thickness of the coating film. The issue of inferiority in oxygen barrier properties tends to occur in particular when the thickness of the coating film is reduced.

The present invention aims to provide a gas barrier film having good oxygen barrier properties which can sufficiently exhibit intrinsic oxygen barrier properties even when the coating film for imparting the oxygen barrier properties is thin.

[Solution to Problem]

Aspects of the present invention are as follows.

[1] A gas barrier film including a resin substrate and an oxygen barrier coating film in contact with a first surface of the resin substrate, in which the resin substrate includes two or more resin layers including a base layer, and, of the two or more resin layers, a resin layer forming the first surface does not contain an anti-blocking agent.
[2] A gas barrier film including a resin substrate, and an oxygen barrier coating film formed on a first surface of the resin substrate, in which at least one of an underlayer and an inorganic oxide layer is provided between the resin substrate and the oxygen barrier coating film; and the resin substrate includes two or more resin layers, and of the two or more resin layers, a resin layer forming the first surface does not contain an anti-blocking agent.

[Advantageous Effects of the Invention]

The gas barrier film of the present invention achieves good oxygen barrier properties by sufficiently exhibiting intrinsic oxygen barrier properties even if the coating film for imparting the oxygen barrier properties is thin.

[Brief Description of the Drawings]

Fig. 1 is a schematic cross-sectional view illustrating a gas barrier film according to a first embodiment of the present invention.
Fig. 2 is a schematic cross-sectional view illustrating a gas barrier film according to a second embodiment of the present invention.
Fig. 3 is a cross-sectional image of a gas barrier film obtained using a scanning electron microscope, according to a comparative example.

[Description of the Embodiments]

To investigate the causes of the issue set forth above, the inventors of the present invention observed surfaces and cross sections of gas barrier films having poor oxygen barrier properties, using an electron microscope. Specifically, such gas barrier films were each electron-microscopically observed using a focused ion/electron beam processing observation device, in portions where an anti-blocking agent (also termed AB agent hereinafter) added to prevent blocking of the resin substrate was present. As a result of the observation, it was confirmed that defects with a width of several micrometers had occurred in portions of each coating film where an AB agent was present. It is considered that these defects became passages for gas permeation and prevented oxygen barrier properties from being sufficiently exhibited.

There were convexities on the surfaces of the resin substrates caused by AB agents. It is considered that, when a coating agent was applied, a coating film was not locally formed in portions where the convexities were present, allowing defects to occur.

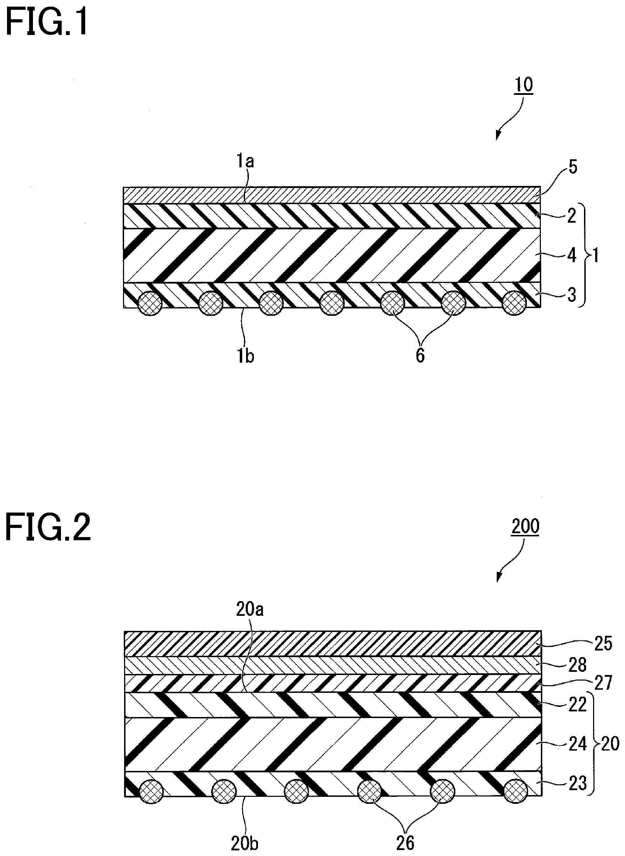

The embodiments of the present invention are based on the findings set forth above. Referring to Fig. 1, a first embodiment of the present invention will be described.

Fig. 1 is a schematic cross-sectional view illustrating a gas barrier film 10 according to the first embodiment.

The gas barrier film 10 includes a resin substrate 1 and a coating film 5 (oxygen barrier coating film).

The coating film 5 is in contact with a first surface 1a of the resin substrate 1.

(Resin substrate)

The resin substrate 1 includes two or more resin layers including a base layer 4. Specifically, the resin substrate 1 includes the base layer 4, a front layer 2 located on one surface of the base layer 4, and a back layer 3 located on the other surface of the base layer 4.

The front layer 2 configures the first surface 1a of the resin substrate 1.

The back layer 3 configures a second surface 1b of the resin substrate 1 facing away from the first surface 1a.

The resin substrate 1 contains a resin, i.e., the front layer 2, the back layer 3, and the base layer 4 configuring the resin substrate 1 each contain a resin.

The base layer 4 controls physical characteristics, chemical characteristics, thermal characteristics, optical characteristics, of the resin substrate 1. The physical characteristics refer to rigidity, flexibility, stiffness, tear strength, impact strength, puncture strength, pinhole resistance. The chemical characteristics refer to water vapor barrier properties, gas barrier properties, aroma retaining properties, chemical resistance, oil resistance. The thermal characteristics refer to melting temperature, glass-transition temperature, heat-resistance limit, cold-resistance limit, heat shrinkage. The optical characteristics refer to transparency, gloss.

The resin as a material for the base layer 4 is preferred to be a polyolefin resin, from the perspective of availability and water vapor barrier properties. In other words, the resin substrate 1 is preferred to be a polyolefin resin substrate.

The polyolefin resin may be polyethylene, polypropylene. The polypropylene may be any of a homopolymer, a random copolymer, and a block copolymer. A homopolymer is a polypropylene composed of propylene units alone. A random copolymer is a polypropylene having a main propylene monomer and a comonomer different from the propylene which are randomly copolymerized, forming a homogeneous phase A block copolymer is a polypropylene in which propylene as a main monomer and the above comonomer are copolymerized in blocks or polymerized in a rubber-like manner, forming a heterogeneous phase. These polyolefin resins may be used singly or as a mixture of two or more.

The base layer 4 may contain additives.

The additive may be appropriately selected from known additives. Examples of the additives may include anti-blocking agents (AB agents), heat-resistance stabilizers, weather-resistance stabilizers, UV absorbers, lubricants, slip agents, nucleating agents, antistatic agents, anti-fogging agents, pigments, and dyes. These additives may be used singly or in combination of two or more. Of these additives, a slip agent is preferred from the perspective of processing suitability.

The content of an additive in the base layer 4 can be appropriately controlled within a range not impairing the advantageous effects of the present invention.

Typically, the base layer 4 does not contain an AB agent.

The base layer 4 may have a single-layer structure or a multilayer structure.

The base layer 4 may have a thickness in the range, for example, of 3 $\mu$m to 200 $\mu$m, and more preferably 6 $\mu$m to 30 $\mu$m.

The resin forming the front layer 2 may be the same as or different from the resin forming the base layer 4. For example, if the resins forming the front layer 2 and the base layer 4 are polyolefin resins, the polyolefin resin forming the front layer 2 may have a melting temperature lower than that of the polyolefin resin forming the base layer 4. This is beneficial to improve adhesion between the resin substrate 1 and the coating film 5. Examples of the polyolefin resin used for the front layer 2 may include an ethylene-1-butene copolymer, ethylene-propylene-1-butene copolymer, ethylene-acrylic acid copolymer, ionomer obtained by crosslinking an ethylene-acrylic acid copolymer with metal ions, polypropylene, poly(1-butene), 1-butene-ethylene copolymer, propylene-ethylene copolymer, propylene-1-butene copolymer, and propylene-pentene copolymer. These resins may be used singly or as a mixture of two or more.

The front layer 2 does not contain an AB agent.

Due to the front layer 2 containing no AB agent, no convexities that may otherwise be derived from an AB agent are present on the first surface 1a of the resin substrate 1. This may minimize the occurrence of defects that may become passages for gas permeation when forming the coating film 5 using a wet coating method, so that good oxygen barrier properties can be exhibited.

The front layer 2 may contain additives other than an AB agent.

The additive may be appropriately selected from known additives. Examples of the additives may include heat-resistance stabilizers, weather-resistance stabilizers, UV absorbers, lubricants, slip agents, nucleating agents, antistatic agents, anti-fogging agents, pigments, and dyes. These additives may be used singly or in combination of two or more. Of these additives, a slip agent is preferred from the perspective of processing suitability.

The content of an additive in the front layer 2 can be appropriately controlled within a range not impairing the advantageous effects of the present invention.

The front layer 2 may have a thickness in the range, for example, of 0.1 $\mu$m to 10 $\mu$m, and more preferably 0.5 $\mu$m to 5.0 $\mu$m.

The resin forming the back layer 3 may be the same as or different from the resin forming the base layer 4, similarly to the resin forming the front layer 2. For example, if the resins forming the back layer 3 and the base layer 4 are polyolefin resins, the polyolefin resin forming the back layer 3 may have a melting temperature lower than that of the polyolefin resin forming the base layer 4. The polyolefin resin used for the back layer 3 may, for example, be those which are mentioned for the polyolefin resin used for the front layer 2.

As shown in Fig. 1, the back layer 3 contains an AB agent 6. The AB agent 6 is dispersed in the back layer 3.

Due to the back layer 3 containing the AB agent 6, convexities derived from the AB agent 6 are locally present on the second surface 1b of the resin substrate 1. These convexities can minimize blocking in the resin substrate 1 or the gas barrier film 10.

The AB agent 6 may be exposed at the second surface 1b, or may be covered with resin.

The AB agent 6 is in the form of solid particles, including organic particles and inorganic particles. The organic particles may include polymethylmethacrylate particles, polystyrene particles, and polyamide particles. These organic particles can be obtained through, for example, emulsion polymerization, suspension polymerization. The inorganic particles may be silica particles, zeolite, talc, kaolinite, feldspar. These AB agents may be used singly or in combination of two or more. When the AB agent 6 is an organic material, polymethylmethacrylate particles are preferred, and when it is an inorganic material, silica particles are preferred.

The AB agent 6 may typically have an average particle size that is not more than the thickness of the back layer 3. The AB agent 6 is preferred to have an average particle size of 0.1 $\mu$m or more and 5 $\mu$m or less, when considering the appearance of the second surface 1b, transparency of the back layer 3, possible loss of the AB agent 6, and anti-blocking performance.

In the gas barrier film 10, the front layer 2 does not contain the AB agent 6. Therefore, the higher the anti-blocking performance of the AB agent 6 is in the back layer, the better. From the perspective of anti-blocking performance, the AB agent 6 is particularly preferred to have an average particle size of 2 $\mu$m or more and 5 $\mu$m or less.

The average particle size of the AB agent 6 is measured using the Coulter principle.

The addition amount of the AB agent 6 in the back layer 3 may, for example, be in the range of 0.1 mass% to 0.4 mass% relative to the total mass of the back layer 3.

The addition amount of the AB agent 6 in the back layer 3 can specifically be calculated from the following formula.

$$\text{Addition amount of AB agent [mass\%]} = \{(i)/100\} \times \{(ii)/100\} \times 100$$

In the formula, (i) indicates a concentration (mass%) of the AB agent in masterbatch resin chips in a pellet form obtained by adding an AB agent to a resin, agitating the mixture, and kneading and melt-extruding the agitated mixture using an extruder.

(ii) indicates a concentration (mass%) of AB agent-containing masterbatch resin chips relative to the total mass of resin pellets forming the back layer 3, when blending the AB agent-containing masterbatch resin chips with a resin that does not contain an AB agent.

The back layer 3 may contain additives other than an AB agent. The additives may be ones similar to those mentioned above. The content of an additives in the back layer 3 can be appropriately controlled within a range not impairing the advantageous effects of the present invention.

The back layer 3 may have a thickness in the range, for example, of 0.1 $\mu$m to 10 $\mu$m, and more preferably 0.5 $\mu$m to 5.0 $\mu$m.

The thickness of the back layer 3 is a thickness in portions where there are no convexities derived from the AB agent 6.

The resin substrate 1 is preferred to be a coextruded film in which the front layer 2, the back layer 3, and the base layer 4 are laminated by coextrusion.

The resin substrate 1 may be a stretched film or may be an unstretched film.

The resin substrate 1 is preferred to include a biaxially stretched polypropylene film. Biaxially stretched polypropylene films have superiority in water vapor barrier performance in particular. Therefore, including a biaxially stretched polypropylene film can improve water vapor barrier properties of the gas barrier film 10.

The biaxially stretched polypropylene film may be a film obtained by processing at least one of homopolymers, random copolymers, block copolymers. The biaxially stretched polypropylene film is preferred to be a coextruded film.

The resin substrate including a biaxially stretched polyolefin film may be a biaxially stretched polypropylene film, or may be a laminate of a biaxially stretched polypropylene film and other resin films. Examples of other resin films include polyester films such as of polyethylene terephthalate and polyethylene naphthalate; polyolefin films such as of polyethylene; polystyrene films; polyamide films such as of nylon; polycarbonate films, and engineering plastic films such as polyacrylonitrile films and polyimide films.

The thickness of the resin substrate 1 can be controlled according to usage, required characteristics, and may, for example, be in the range of 3 $\mu$m to 200 $\mu$m, and more preferably 6 $\mu$m to 30 $\mu$m, but is not particularly limited to these ranges.

The thickness of the resin substrate 1 is a thickness in portions where there are no convexities derived from the AB agent 6.

The surfaces of the resin substrate 1 (the first and second surfaces 1a and 1b) may be subjected to at least one treatment selected from the group consisting of chemical treatment, solvent treatment, corona treatment, plasma treatment, and ozone treatment.

(Oxygen barrier coating film)

The coating film 5 may be a coating film known as an oxygen barrier coating film formed using a wet coating method.

The coating film 5 can be obtained by forming a coating of a coating agent on the first surface 1a of the resin substrate 1 using a wet coating method, and drying the coating. It should be noted that a coating refers to a wet film, and a coating film refers to a dry film.

The coating film 5 is preferred to be a coating film formed of a coating agent containing a water-soluble polymer and an inorganic laminar mineral (inorganic laminar mineral composite resin film). Gas barrier films including an inorganic laminar mineral composite resin film as a gas barrier layer have advantages, such as exhibiting good oxygen barrier properties in a high humidity atmosphere, having sufficient adhesion strength or film cohesive strength, as a packaging material for other materials, having transparency and stretch resistance that cannot be found in metal foils or vapor-deposited metal films, having no risk of generating harmful substances such as dioxins, and other advantages. Details of the coating agent will be described later.

The thickness of the coating film 5, i.e., the dry thickness of the coating of a coating agent, may be determined according to required oxygen barrier properties, and may be in the range of 0.2 $\mu$m to 5 $\mu$m, for example.

The thickness of the coating film 5 is preferred to be in the range of 0.2 $\mu$m to 0.7 $\mu$m, and more preferably 0.3 $\mu$m to 0.5 $\mu$m. If the thickness of the coating film 5 is 0.2 $\mu$m or more, sufficient oxygen barrier properties are easily obtained.

If the thickness of the coating film 5 is 0.7 $\mu$m or less, oxygen barrier properties on the first surface 1a may be greatly affected by the presence or absence of the convexities derived from the AB agent, and usefulness of the present invention may be enhanced. If the thickness of the coating film 5 is 0.7 $\mu$m or less, a uniform coating surface can be easily formed, and drying load and manufacturing cost can be reduced.

(Method of producing gas barrier film)

The gas barrier film 10 can be produced by forming a coating film 5 on the first surface 1a of the resin substrate 1.

The resin substrate 1 may be a commercially available resin substrate, or may be a resin substrate produced using a known method.

As described above, the coating film 5 can be obtained by forming a coating of a coating agent on the first surface 1a of the resin substrate 1 using a wet coating method, and drying the coating.

The wet coating method may be a known wet coating method, such as roll coating, gravure coating, reverse coating, die coating, screen printing, or spray coating.

The method of drying the coating film of the coating agent may be a known drying method, such as hot-air drying, hot-roll drying, or infrared radiation. Drying conditions may be 90°C and 10 seconds, for example.

(Coating agent)

As mentioned above, a preferred mode of a coating agent is a coating agent containing a water-soluble polymer and an inorganic laminar mineral.

Typically, the coating agent of the present mode further contains an aqueous medium.

The coating agent of the present mode is preferred to further contain an aqueous polyurethane resin.

The coating agent of the present mode is preferred to further contain a curing agent.

As necessary, the coating agent of the present mode may further contain other components.

<Water-soluble polymer>

The water-soluble polymer refers to a polymer that is soluble in water. The term soluble as used herein refers to a state in which a polymer as a solute is dispersed at the molecular chain level in water as a solvent to form a homogeneous system. Specifically, the term soluble refers to a state in which a polymer is homogeneously dispersed in water with the polymer chains being disentangled as a result of the intermolecular force between a polymer chain and a water molecule becoming stronger than the intermolecular force between molecular chains of the polymer chains.

The water-soluble polymer is not particularly limited as long as it can be inserted or coordinated (intercalated) between crystal units of an inorganic laminar mineral.

Examples of the water-soluble polymer include polyvinyl alcohol resins (polyvinyl alcohols, derivatives thereof), other vinyl polymers (polyvinylpyrrolidone, polyacrylic acid, polymethacrylic acid or ethers and salts of polymethacrylic acid, and copolymers thereof, polyhydroxyethyl methacrylate and copolymers thereof), cellulose derivatives (carboxymethylcellulose, hydroxyethylcellulose), starches (oxidized starches, etherified starches, dextrin), copolymerized polyester having a polar group (polyester having a sulfoisophthalic acid structure), urethane polymers, and functional group modified polymers in which carboxyl groups of these various polymers are modified.

Considering coating film cohesive strength, the water-soluble polymer is preferred to have a polymerization degree of 200 or more.

The coating agent of the present mode may contain one, or two or more water-soluble polymers.

The water-soluble polymer is preferred to contain at least one polyvinyl alcohol resin selected from the group consisting of at least polyvinyl alcohol polymers and derivatives thereof, and is most preferred to contain a polyvinyl alcohol resin having a saponification degree of 95% or more and polymerization degree of 300 or more. The polymerization degree of the polyvinyl alcohol resin is preferred to be in the range of 300 to 2,400, and more preferably 450 to 2,000. Polyvinyl alcohol resins will have lower hygroscopic and swelling properties with an increase in saponification degree and polymerization degree, and will exhibit higher gas barrier properties. If the saponification degree of the polyvinyl alcohol is 95% or more, sufficient gas barrier properties can be easily achieved If the polymerization degree of the polyvinyl alcohol is 300 or more, oxygen barrier properties and coating film cohesive strength can be enhanced. If the polymerization degree is 2,400 or less, the coating agent may have sufficiently low viscosity and may be easily homogeneously mixed with other components. Therefore, problems, such as deterioration in gas barrier properties and adhesion strength, may be unlikely to occur.

<Inorganic laminar mineral>

The inorganic laminar mineral refers to an inorganic compound in which extremely thin crystal layer units are superposed to form one laminar particle. The inorganic laminar mineral is preferred to be a compound which swells and/or cleaves in water, and is particularly preferred to be a clay compound having water-swellable properties. Specifically, the inorganic laminar mineral is preferred to be a clay compound coordinating water between the crystal layer units, and having properties of absorbency and/or swellability. In general, such a clay compound is a compound having a laminar structure in which layers each having a tetrahedral structure with $Si^{4+}$ coordinated with $O^{2-}$, and layers each having an octahedral structure with $Al^{3+}$, $Mg^{2+}$, $Fe^{2+}$, $Fe^{3+}$, or the like coordinated with $O^{2-}$ and $OH^{-}$, are bound and laminated together at a ratio of 1:1 or 2:1. This clay compound may be a natural compound or a synthesized compound.

Typical inorganic laminar minerals may include hydrous silicates such as phyllosilicate minerals, which include, for example, kaolinite clay minerals such as halloysite, kaolinite, endellite, dickite, and nacrite, antigorite clay minerals such as antigorite and chrysotile, smectite clay minerals such as montmorillonite, beidellite, nontronite, saponite, hectorite, sauconite, and stevensite, vermiculite clay minerals such as vermiculite, micas, and mica clay minerals such as white mica, bronze mica, margarite, tetra-silicic mica, and taeniolite. These inorganic laminar minerals may be used singly or in combination of two or more.

Of these inorganic laminar minerals, smectite clay minerals such as montmorillonite, or mica clay minerals such as water-swellable mica are particularly preferred.

The inorganic laminar mineral is preferred to have an average particle size of 10 μm or less and a thickness of 500 nm or less. If the average particle size is 10 μm or less and the thickness is 500 nm or less, the inorganic laminar mineral may be easily evenly arranged in the coating film of the coating agent, to thereby enhance gas barrier properties and film cohesive strength.

The lower limit of the average particle size of the inorganic laminar mineral may be 1 μm, for example.

The lower limit of the thickness of the inorganic laminar mineral may be 10 nm, for example.

The average particle size of the inorganic laminar mineral is measured using a laser diffractometry particle size distribution meter.

The thickness of the inorganic laminar mineral is measured using an atomic force microscope (AFM).

The inorganic laminar mineral is preferred to contain at least water-swellable synthetic mica having an average particle size in the range of 1 μm to 10 μm and a thickness in the range of 10 nm to 100 nm. Water-swellable synthetic mica has high miscibility with water-soluble polymers and aqueous polyurethane resins, and contains fewer impurities compared to natural mica. Accordingly, if such water-swellable synthetic mica is used as the inorganic laminar mineral, gas barrier properties and film cohesive force are unlikely to be deteriorated by impurities. Furthermore, the water-swellable synthetic mica, which contains fluorine atoms in the crystal structure, may also contribute to minimizing humidity dependence of the gas barrier properties of the coating film of the coating agent. In addition, the water-swellable synthetic mica, which has a high aspect ratio compared to other water-swellable inorganic laminar minerals, may contribute to more effectively exerting a labyrinth effect and thus may contribute to imparting particularly high gas barrier properties to the coating film of the coating agent.

<Aqueous medium>

The aqueous medium may be water, a water-soluble or hydrophilic organic solvent, or a mixture of these materials. Aqueous media generally contain water, or contain water as a main component.

Such an aqueous medium is preferred to have a water content of 70 mass% or more, and more preferably 80 mass% or more.

Examples of the water-soluble or hydrophilic organic solvent may include alcohols such as methanol, ethanol, and isopropanol; ketones such as acetone and methyl ethyl ketone; ethers such as tetrahydrofuran; cellosolves; carbitols; and nitriles such as acetonitriles.

If the coating agent contains an aqueous polyurethane resin, the aqueous medium may contain or may not contain a neutralizing agent (bases) that neutralizes an acid group. Usually, coating media contain neutralizing agents.

<Aqueous polyurethane resin>

Aqueous polyurethane resins contain a polyurethane resin having an acid group (also termed an acid group-containing polyurethane resin hereinafter), and a polyamine compound.

The coating agent, if it contains an aqueous polyurethane resin, may enhance wettability of the coating agent for the resin substrate 1, and adhesion strength of the coating film of the coating agent for the resin substrate 1. Furthermore, the aqueous polyurethane resin, which contains an acid group-containing polyurethane resin and a polyamine compound, can exhibit good oxygen barrier properties even in a high humidity atmosphere.

The acid group of the acid group-containing polyurethane resin (self-emulsifying anionic polyurethane resin) configuring an aqueous polyurethane resin can bind with the amino group (primary amino group, secondary amino group, tertiary amino group, etc.) of the polyamine compound configuring the aqueous polyurethane resin. The acid group may be a carboxyl group, sulfonic acid group. The acid group, which can generally be neutralized with a neutralizer (base), may form a salt together with the base. The acid group may be located at the terminals or side chains of the acid group-containing polyurethane resin, and is preferred to be located at least at the side chains.

The acid value of the acid group-containing polyurethane resin can be selected within the range with which water solubility or water dispersibility can be imparted. The acid value is generally in the range of 5 to 100 mg KOH/g, preferably 10 to 70 mg KOH/g, and more preferably 15 to 60 mg KOH/g. If the acid value of the acid group-containing polyurethane resin is less than 5 mg KOH/g, water solubility and water dispersibility of the acid group-containing polyurethane resin may become insufficient, which may impair uniform dispersibility of the aqueous polyurethane resin and other materials, or dispersion stability of the coating agent. If the acid value of the acid group-containing polyurethane resin exceeds 100 mg KOH/g, water resistance or oxygen barrier properties of the coating film of the coating agent may be impaired. Therefore, the acid group-containing polyurethane resin with an acid value in the range of 5 to 100 mg KOH/g can prevent lowering of dispersion stability of the coating agent, and lowering of water resistance or oxygen barrier properties of the coating film of the coating agent.

The acid value of the acid group-containing polyurethane resin is measured using a method according to JIS K0070.

The total of the urethane group concentration and the urea group concentration of the acid group-containing polyurethane resin is preferred to be 15 mass% or more and 60 mass% or less, and more preferably in the range of 20 mass% to 60 mass%. If the total of the urethane group concentration and the urea group concentration is 15 mass% or more, oxygen barrier properties of the coating film of the coating agent can be further enhanced. If the total of the urethane group concentration and the urea group concentration is 60 mass% or less, flexibility of the coating film of the coating agent can be further enhanced.

The urethane group concentration refers to a ratio of the molecular weight of the urethane group (59 g/equivalent) to the molecular weight of the recurring polyurethane resin units.

The urea group concentration refers to a ratio of the molecular weight of the urea group (primary amino group (amino group): 58 g/equivalent, secondary amino group (imino group): 57 g/equivalent) to the molecular weight of the recurring polyurethane resin units.

If a mixture of two or more acid group-containing polyurethane resins is used, the urethane group concentration and the urea group concentration can be calculated from the charge of reaction components, i.e. the ratios of the individual components used.

Acid group-containing polyurethane resins generally contain at least rigid units (units of hydrocarbon rings) and short-chain units (e.g., units of hydrocarbon chains). Specifically, the recurring units of an acid group-containing polyurethane resin generally contain hydrocarbon rings (aromatic and/or non-aromatic hydrocarbon rings) derived from a polyisocyanate component, polyhydroxy acid component, polyol component, or elongated chain component (especially, at least a polyisocyanate component).

The ratio of the hydrocarbon ring units to the recurring units of the acid group-containing polyurethane resin is generally in the range of 10 mass% to 70 mass%, preferably 15 mass% to 65 mass%, and more preferably 20 mass% to 60 mass%. If the ratio of the hydrocarbon ring units to the recurring units of the acid group-containing polyurethane resin is 10 mass% or more, oxygen barrier properties of the coating film of the coating agent can be further enhanced. If the ratio of the hydrocarbon ring units to the recurring units of the acid group-containing polyurethane resin is 70 mass% or less, flexibility of the coating film of the coating agent can be further enhanced.

The acid group-containing polyurethane resin may have an appropriately selected number average molecular weight which is preferred to be in the range of 800 to 1,000,000, more preferably 800 to 200,000, and even more preferably 800 to 100,000. If the number average molecular weight of the acid group-containing polyurethane resin is 1,000,000 or less, increase in viscosity of the coating agent can be minimized. If the number average molecular weight of the acid group-containing polyurethane resin is 800 or more, oxygen barrier properties of the coating film of the coating agent can be further enhanced.

The number average molecular weight of the acid group-containing polyurethane resin is measured using gel permeation chromatography (GPC) and expressed relative to a polystyrene standard.

The acid group-containing polyurethane resin may have crystalline nature to enhance oxygen barrier properties.

The acid group-containing polyurethane resin is preferred to have a glass transition temperature of 100°C or more, more preferably 110°C or more, and even more preferably 120°C or more. If the glass transition temperature of the acid group-containing polyurethane resin is 100°C or more, oxygen barrier properties of the coating film of the coating agent can be further enhanced.

Acid group-containing polyurethane resins typically have a glass transition temperature of 200°C or less, preferably 180°C or less, and more preferably 150°C or less. If the preferred ranges of the above items are satisfied, there may be substantially a low probability that the acid group-containing polyurethane resin would have a glass transition temperature higher than 200°C.

Accordingly, the glass transition temperature of the acid group-containing polyurethane resin is preferred to be in the range of 100°C to 200°C, more preferably 110°C to 180°C, and even more preferably 120°C to 150°C.

The glass transition temperature of the acid group-containing polyurethane resin can be measured using differential scanning calorimetry (DSC).

The aqueous polyurethane resin can exhibit oxygen barrier properties by allowing the acid group of the acid-group-containing polyurethane resin to bind to the polyamine compound as a cross-linking agent.

The polyamine compound composing the aqueous polyurethane resin is not particularly limited, but various compounds having two or more basic nitrogen atoms can be used, as long as the compounds can bind to the acid group and improve oxygen barrier properties. The basic nitrogen atoms are nitrogen atoms that can bind to the acid group of acid group-containing polyurethane resins, and include, for example, nitrogen atoms in an amino group, such as a primary amino group, secondary amino group, and tertiary amino group. The bond between the polyamine compound and the acid group of the polyurethane resin may be an ionic bond (e.g., ionic bond between a tertiary amino group and a carboxyl group), or may be a covalent bond (e.g., amide bond).

The polyamine compound is preferred to include at least one type of amino group selected from the group consisting of a primary amino group, secondary amino group, and tertiary amino group.

Specific examples of the polyamine compound include alkylene diamines and polyalkylene polyamines. Examples of the alkylene diamines include C2 to C10 alkylene diamines, such as ethylene diamine, 1,2-propylene diamine, 1,3-propylene diamine, 1,4-butane diamine, and 1,6-hexamethylene diamine.

It should be noted that C refers to carbon number. Examples of the polyalkylene polyamines include tetraalkylene polyamine and silicon compounds having two or more basic nitrogen atoms (silane coupling agent). Examples of the silicon compounds include 2-(N-(2-aminoethyl)amino)ethyltrimethoxysilane and 3-(N-(2-aminoethyl)amino)propyltriethoxysilane.

The polyamine compound is preferred to have an amine value in the range of 100 to 1,900 mgKOH/g, more preferably 150 to 1,900 mgKOH/g, even more preferably 200 to 1,900 mgKOH/g, still more preferably 200 to 1,700 mgKOH/g, and most preferably 300 to 1,500 mgKOH/g. If the amine value of the polyamine compound is 100 mgKOH/g or more, gas barrier properties of the aqueous polyurethane resin may be further enhanced. If the amine value of the polyamine compound is 1,900 mgKOH/g or less, water dispersion stability of the aqueous polyurethane resin may be further enhanced.

The amine value of the polyamine compound is measured using the following method.

[Method of measuring amine value]

0.5 to 2 g of sample (sample amount S g) is weighed. 30 g of ethanol is added to the weighed sample to dissolve it. Bromophenol blue is added as an indicator to the obtained solution to titrate the solution with 0.2 mol/L of ethanol hydrochloric acid solution (titer f). A point where the color of the solution changes to a color between green and yellow is set as an end point, and a titer (AmL) at the end point is used for calculating an amine value through the following formula.

$$\text{Formula: Amine value (mgKOH/g)} = A \times f \times 0.2 \times 56.108/S$$

In the aqueous polyurethane resin, the content of the polyamine compound is preferred to be a content that achieves a molar ratio between the acid group of the acid group-containing polyurethane resin and the basic nitrogen atoms of the polyamine compound (acid group/basic nitrogen atoms) in the range of 10/1 to 0.1/1, and more preferably 5/1 to 0.2/1. If the ratio of acid group/basic nitrogen atoms is in the range of 10/1 to 0.1/1, a cross-linking reaction appropriately occurs between the acid group of the acid group-containing polyurethane and the polyamine compound, so that the coating film of the coating agent can exhibit good oxygen barrier properties even in a high humidity atmosphere.

Aqueous polyurethane resins are generally formed in a state of being dissolved or dispersed in an aqueous medium. The aqueous medium is as described above.

The aqueous polyurethane resin may be in the form of a solution in which a polyurethane resin is dissolved in an aqueous medium, or may be in the form of a water dispersion in which a polyurethane resin is dispersed in an aqueous medium.

In the water dispersion, the average particle size of dispersed particles (polyurethane resin particles) is not particularly limited but is preferred to be in the range from 20 nm to 500 nm, more preferably 25 nm to 300 nm, and even more preferably 30 nm to 200 nm. The dispersed particles with an average particle size of 500 nm or less can enhance uniform dispersion between the dispersed particles and other materials and dispersion stability of the coating agent, and thus oxygen barrier properties of the coating film of the coating agent can be further enhanced. The dispersed particles with an average particle size of 20 nm or more can contribute to easily obtaining a water dispersion.

The average particle size is a value measured using a concentrated particle size analyzer (FPAR-10 manufactured by Otsuka Electronics Co., Ltd.) under conditions where the solid content concentration is in the range of 0.03 mass% to 0.3 mass%.

The aqueous polyurethane resin may be a commercially available resin, or may be a resin produced using a known method. The method of producing the aqueous polyurethane resin is not particularly limited, but may be a method of an ordinary aqueous conversion technique, such as an acetone method and prepolymer method, used for polyurethane resins. In a urethanization reaction, a urethanization catalyst, such as an amine-, tin-, or lead-based catalyst, may be used, as necessary.

For example, the acid group-containing polyurethane resin can be prepared by reacting a polyisocyanate compound, a polyhydroxy acid, and, as necessary, a polyol component and/or a chain extender component, in an inert organic solvent of, for example, ketones such as acetone, ethers such as tetrahydrofuran, or nitriles such as acetonitrile. Specifically, an aqueous solution or a water dispersion of the acid group-containing polyurethane resin can be prepared by reaction of a polyisocyanate compound and a polyhydroxy acid with a polyol component in an inert organic solvent (particularly, a hydrophilic or water-soluble organic solvent) to produce a prepolymer having an isocyanate group at the terminals thereof, neutralizing the prepolymer with a neutralizer for dissolution or dispersion in an aqueous medium, adding a chain extension component for reaction, and removing the organic solvent. A polyamine compound is added to the aqueous solution or the water dispersion of the acid group-containing polyurethane resin obtained in this way, followed by heating, as necessary, to prepare an aqueous polyurethane resin in the form of an aqueous solution or a water dispersion. If heating is performed, the heating temperature is preferred to be in the range of 30°C to 60°C.

<Curing agent>

The curing agent has reactivity to the components (water-soluble polymer, inorganic laminar mineral, aqueous polyurethane resin) of the coating agent.

A coating agent containing a curing agent can achieve stronger adhesion between the coating film of the coating agent and the resin substrate 1.

Types of the curing agent are not particularly limited as long as the curing agent has reactivity to the components of the coating agent.

The curing agent is preferred to be a silane coupling agent or an epoxy compound.

The silane coupling agent may be an ordinarily used silane coupling agent, including, for example, compounds having alkoxy groups and organic reactive groups bound to silicon atoms.

The alkoxy group of the silane coupling agent produces a silanol group on hydrolysis for interaction, such as reaction or adsorption, with an inorganic compound. In the coating agent, the inorganic laminar mineral and the silane coupling agent interact to improve cohesive strength of the coating film of the coating agent. Since the organic reactive group of the silane coupling agent reacts with the organic components, such as the water-soluble polymer and the aqueous polyurethane resin, adhesion of the coating film of the coating agent to the resin substrate 1 can be improved. Accordingly, the coating agent containing a silane coupling agent can enhance cohesive strength of the coating film of the coating agent and improve adhesion with the resin substrate 1 or other substrates, thereby enhancing practical strength as a packaging material.

The silane coupling agent may, for example, be a compound expressed by $RSiX_3$ (R is an organic reactive group and X is an alkoxy group). The organic reactive group may be an organic reactive group having, for example, an amino group, (meth)acrylic group, epoxy group, vinyl group, mercapto group, isocyanate group, isocyanurate group. The (meth) acrylic group refers to both an acrylic group and a methacrylic group. The alkoxy group may, for example, be a methoxy group, ethoxy group.

The silane coupling agent is preferred to be a silane coupling agent in which the organic reactive group has reactivity to the components of the coating agent. For example, the silane coupling agent having a vinyl group may be vinyl trimethoxysilane, vinyl triethoxysilane. The silane coupling agent having an epoxy group may be 2(3,4-epoxy cyclohexyl) ethyltrimethoxysilane, 3-glycidoxypropyltrimethoxysilane, 3-glycidoxypropyltriethoxysilane, 3-glycidoxypropylmethyldimethoxysilane, 3-glycidoxypropylethyldiethoxysilane. The silane coupling agent having an amino group may be 3-aminopropyltrimethoxysilane, 3-aminopropyltriethoxysilane, N-2(aminoethyl)-3-aminopropyltrimethoxysilane, or N-2(aminoethyl)-3-aminopropylmethyldimethoxysilane. The silane coupling agent having a mercapto group may be 3-mercaptopropyltrimethoxysilane, or 3-mercaptopropylmethyldimethoxysilane. The silane coupling agent having a (meth) acrylic group may be 3-acryloxypropyltrimethoxysilane. The silane coupling agent having an isocyanate group may be 3-isocyanate propyltriethoxysilane. The silane coupling agent having an isocyanurate group may be tris-(trimethoxysilylpropyl)isocyanurate. These silane coupling agents may be used singly or in combination of two or more.

The silane coupling agent is preferred to have an epoxy group. The epoxy group has good reactivity to a hydroxyl group of the aqueous polyurethane resin or the water-soluble polymer and thus achieve particularly high adhesion strength between the coating film of the coating agent and the resin substrate 1.

The epoxy compound is not particularly limited as long as it is a compound having an epoxy group.

The epoxy compound reacts with the terminal hydroxyl group of the aqueous polyurethane resin to form a strong bond. Accordingly, the coating agent containing an epoxy compound can enhance cohesive strength of the coating film and improve adhesion with the resin substrate 1 or other substrates, thereby enhancing practical strength as a packaging material. Also, since the reaction speed is in an appropriate range, the usable period of the coating agent after addition of the curing agent is long.

The epoxy compound may be a monofunctional compound having one epoxy group, or may be a polyfunctional epoxy compound having two or more epoxy groups. These epoxy compounds may be used in combination.

Examples of the monofunctional epoxy compound may include silane coupling agents having an epoxy group such as 2-(3,4-epoxycyclohexyl) ethyltrimethoxysilane, 3-glycidoxypropyltrimethoxysilane, 3-glycidoxypropyltriethoxysilane, 3-glycidoxypropylmethyldimethoxysilane, and 3-glycidoxypropylethyldiethoxysilane. Examples of monofunctional epoxy compounds other than the silane coupling agents having an epoxy group may include phenylglycidyl ether, 2-ethylhexyl glycidyl ether, ethyl diethylene glycol glycidyl ether, dicyclopentadiene glycidyl ether, and 2-hydroxyethyl glycidyl ether. These monofunctional epoxy compounds may be used singly or in combination of two or more.

Examples of the polyfunctional epoxy compound may include hydroquinone diglycidyl ether, resorcinol diglycidyl ether, ethylene glycol diglycidyl ether, polyethylene glycol diglycidyl ether, cyclohexene diol diglycidyl ether, cyclohexanedimethanol diglycidyl ether, dicyclopentadienediol diglycidyl ether, sorbitol polyglycidyl ether, polyglycerol polyglycidyl ether, trimethylolpropane triglycidyl ether, pentaerythritol tetraglycidyl ether, phenolic novolac-type epoxy resin, cresol novolac-type epoxy resin, and epoxidized polybutadiene. These polyfunctional epoxy compounds may be used singly or in combination of two or more.

The epoxy compound is preferred to be a silane coupling agent having an epoxy group or a polyfunctional epoxy compound because of being able to form a complicated and strong cross-linked structure.

The polyfunctional epoxy compound is preferred to be a trifunctional or more epoxy compound because of being able to form a more complicated cross-linked structure.

<Content ratio of components>

The content (solids) of the water-soluble polymer in the coating agent is preferred to be in the range of 25 mass% to 80 mass%, more preferably 30 mass% to 75 mass%, and even more preferably 35 mass% to 70 mass%, relative to the total solids of the coating agent. If the content of the water-soluble polymer is in the range of 25 mass% to 80 mass%, barrier properties can be effectively exerted in a high humidity environment, with the cohesive strength of the coating film of the coating agent retained.

The content (solids) of the inorganic laminar mineral in the coating agent is preferred to be in the range of 5 mass% to 60 mass%, more preferably 7 mass% to 45 mass%, and even more preferably 10 mass% to 30 mass%, relative to the total solids of the coating agent. If the content of the inorganic laminar mineral is in the range of 5 mass% to 60 mass%, barrier properties can be effectively exerted in a high humidity environment, with the cohesive strength of the coating film of the coating agent retained.

If the coating agent contains an aqueous polyurethane resin, the mass ratio of the aqueous polyurethane resin and the water-soluble polymer (aqueous polyurethane resin / water-soluble polymer) in terms of solids in the coating agent is preferred to be in the range of 5/95 to 85/15, more preferably 10/90 to 75/25, and even more preferably 15/85 to 70/30. If the aqueous polyurethane resin / water-soluble polymer is 85/15 or less, unevenness is unlikely to occur when applying the coating agent. The unevenness occurring when applying the coating agent may lead to deterioration in appearance and barrier properties. If the aqueous polyurethane resin / water-soluble polymer is 5/95 or more, good wettability can be achieved for the resin substrate 1, and unevenness due to repellence is unlikely to occur when applying the coating agent. The unevenness due to repellence may deteriorate oxygen barrier properties. The aqueous polyurethane resin / water-soluble polymer being in the range of 5/95 to 85/15 can achieve good wettability of the coating agent for the resin substrate 1, and thus the coating agent can be applied without unevenness, thereby forming a coating film with good appearance and barrier properties.

If the coating agent contains a curing agent, the content (solids) of the curing agent in the coating agent is preferred to be in the range of 0.5 mass% to 30 mass%, more preferably 1 mass% to 25 mass%, and even more preferably 3 mass% to 20 mass%, relative to the total solids of the coating agent. If the content of the curing agent is in the range of 0.5 mass% to 30 mass%, cohesive force of the coating film of the coating agent and adhesion strength thereof to the resin substrate 1 can be sufficiently enhanced, with good wettability for the resin substrate retained.

In the coating agent, the total content of the water-soluble polymer, the inorganic laminar mineral, the aqueous polyurethane resin, and the curing agent is preferred to be 85 mass% or more, more preferably 90 mass% or more, and even more preferably 95 mass% or more, relative to the total solids of the coating agent. The upper limit of the total content is not particularly limited, but may be 100 mass%.

At 23°C, the coating agent is preferred to have a viscosity in the range of 10 to 80 mPa•s, and more preferably 10 to 50 mPa•s.

The viscosity of the coating agent is a value measured using an E-type viscometer.

The coating agent of the present mode can be prepared by mixing a water-soluble polymer with an inorganic laminar mineral, and, if necessary, by mixing therewith an aqueous polyurethane resin, a curing agent, other components, a further aqueous medium. The order of mixing these components is not particularly limited.

The curing agent may be mixed together with other components, or may be added immediately before the coating agent is applied to the resin substrate 1.

(Advantageous effects)

The gas barrier film 10 described above includes the resin substrate 1 and the coating film 5 contacting the first surface 1a of the resin substrate 1. The resin substrate 1 includes the front layer 2, the back layer 3, and the base layer 4. Since the front layer 2 does not contain an AB agent, no defects are caused in the coating film 5 if it is thin. Consequently, the coating film 5 can exhibit intrinsic oxygen barrier properties to serve as a coating film having good oxygen barrier properties. With the coating film 5 being made thin, the gas barrier film 10 can be provided at low cost.

Furthermore, in the present embodiment, blocking can be minimized in the resin substrate 1 or in the gas barrier film 10 due to the back layer 3 containing an AB agent.

The reason why intrinsic oxygen barrier properties can be sufficiently exhibited with the thin coating film 5 can be considered as follows.

Resin substrates containing AB agents for preventing blocking have convexities on the surfaces. If a coating agent is applied to such a resin substrate using a wet coating method and if, in particular, the application quantity is small, the coating film is not locally formed in portions where the convexities are present, allowing defects to occur. It is considered that these defects become passages for gas permeation and prevent oxygen barrier properties from being sufficiently exhibited.

In the gas barrier film 10, since the front layer 2 does not contain an AB agent, no convexities that would be caused by the AB agent are present on the first surface 1a, preventing the occurrence of defects in the coating film 5 which would otherwise have been caused by the convexities. This is considered to be why intrinsic oxygen barrier properties can be sufficiently exhibited.

For example, the back layer 3 does not have to contain the AB agent 6. From the perspective of production of the resin substrate 1 or handleability of the gas barrier film 10, the back layer 3 is preferred to contain the AB agent 6.

The gas barrier film may further include, as necessary, a print layer, anchor coat layer, overcoat layer, light-shielding layer, adhesive layer, heat-sealable layer, and other functional layers.

If the gas barrier film includes a heat-sealable layer, the heat-sealable layer may be located on at least one outermost surface of the gas barrier film. The gas barrier film, if it includes a heat-sealable layer, can hermetically achieve heat sealing.

The heat-sealable layer can be laminated, for example, on a laminate, in which the first surface 1a of the resin substrate 1 is provided with the coating film 5, using a known adhesive such as a polyurethane-, polyester-, or polyether-based adhesive using a known dry lamination method, extrusion lamination method. The heat-sealable layer may be laminated on the second surface 1b of the resin substrate 1, or may be laminated on the coating film 5.

A second embodiment of the present invention will be described. Fig. 2 is a schematic cross-sectional view illustrating a gas barrier film 200 according to the second embodiment of the present invention.

The gas barrier film 200 includes a resin substrate 20, an inorganic oxide layer 28, and a coating film 25 (oxygen barrier coating film). It should be noted that the underlayer 27 be omitted.

The underlayer 27 has one surface contacting a first surface 20a of the resin substrate 20 and the other surface contacting the inorganic oxide layer 28 or the coating film 25 and facing away from the surface contacting the first surface 20a.

The inorganic oxide layer 28 has one surface contacting the first surface 20a of the resin substrate 20 or the underlayer 27 and the other surface contacting the coating film 25 and facing away from the surface contacting the first surface 20a or the underlayer 27.

(Resin substrate)

The resin substrate 20 includes two or more resin layers including a base layer 24. Specifically, the resin substrate 20 includes the base layer 24, a front layer 22 located on one surface of the base layer 24, and a back layer 23 located on the other surface of the base layer 24.

The front layer 22 configures the first surface 20a of the resin substrate 20.

The back layer 23 configures a second surface 20b of the resin substrate 20 facing away from the first surface 20a.

The resin substrate 20 contains a resin, i.e., the front layer 22, the back layer 23, and the base layer 24 configuring the resin substrate 20 each contain a resin.

The base layer 24 controls physical characteristics, chemical characteristics, thermal characteristics, optical characteristics, of the resin substrate 20. The physical characteristics refer to rigidity, flexibility, stiffness, tear strength, impact strength, puncture strength, pinhole resistance. The chemical characteristics refer to water vapor barrier properties, gas barrier properties, aroma retaining properties, chemical resistance, oil resistance. The thermal characteristics refer to melting temperature, glass-transition temperature, heat-resistance limit, cold-resistance limit, heat shrinkage. The optical characteristics refer to transparency, gloss.

The resin as a material for the base layer 24 is preferred to be a polyolefin resin, from the perspective of availability and water vapor barrier properties. In other words, the resin substrate 20 is preferred to be a polyolefin resin substrate.

The polyolefin resin may be polyethylene, polypropylene. The polypropylene may be any of a homopolymer, a random copolymer, and a block copolymer. A homopolymer is a polypropylene composed of propylene units alone. A random copolymer is a polypropylene having a main propylene monomer and a comonomer different from the propylene which are randomly copolymerized, forming a homogeneous phase A block copolymer is a polypropylene in which propylene as a main monomer and the above comonomer are copolymerized in blocks or polymerized in a rubber-like manner, forming a heterogeneous phase. These polyolefin resins may be used singly or as a mixture of two or more.

The base layer 24 may contain an additive.

The additive may be appropriately selected from known additives. Examples of the additives may include anti-blocking agents (AB agents), heat-resistance stabilizers, weather-resistance stabilizers, UV absorbers, lubricants, slip agents, nucleating agents, antistatic agents, anti-fogging agents, pigments, and dyes. These additives may be used singly or in combination of two or more. Of these additives, a slip agent is preferred from the perspective of processing suitability.

The content of an additive in the base layer 24 can be appropriately controlled within a range not impairing the advantageous effects of the present invention.

Typically, the base layer 24 does not contain an AB agent.

The base layer 24 may have a single-layer structure or a multilayer structure.

The base layer 24 may have a thickness in the range, for example, of 3 $\mu$m to 200 $\mu$m, and more preferably 6 $\mu$m to 30 $\mu$m.

The resin forming the front layer 22 may be the same as or different from the resin forming the base layer 24. For example, if the resins forming the front layer 22 and the base layer 24 are polyolefin resins, the polyolefin resin forming the front layer 22 may have a melting temperature lower than that of the polyolefin resin forming the base layer 24. This is beneficial to improve adhesion between the resin substrate 20 and the coating film 25. Examples of the polyolefin resin used for the front layer 22 may include an ethylene-1-butene copolymer, ethylene-propylene-1-butene copolymer, ethylene-acrylic acid copolymer, ionomer obtained by crosslinking an ethylene-acrylic acid copolymer with metal ions, polypropylene, poly(1-butene), 1-butene-ethylene copolymer, propylene-ethylene copolymer, propylene-1-butene copolymer, and propylene-pentene copolymer. These resins may be used singly or as a mixture of two or more.

The front layer 22 does not contain an AB agent.

Due to the front layer 22 containing no AB agent, no convexities that may otherwise be derived from an AB agent are present on the first surface 20a of the resin substrate 20. This may minimize the occurrence of defects that may become passages for gas permeation when forming the coating film 25 using a wet coating method, so that good oxygen barrier properties can be exhibited.

The front layer 22 may contain an additive other than an AB agent.

The additive may be appropriately selected from known additives. Examples of the additives may include heat-resistance stabilizers, weather-resistance stabilizers, UV absorbers, lubricants, slip agents, nucleating agents, antistatic agents, anti-fogging agents, pigments, and dyes. These additives may be used singly or in combination of two or more. Of these additives, a slip agent is preferred from the perspective of processing suitability.

The content of an additive in the front layer 22 can be appropriately controlled within a range not impairing the advantageous effects of the present invention.

The front layer 22 may have a thickness in the range, for example, of 0.1 $\mu$m to 10 $\mu$m, and more preferably 0.5 $\mu$m to 5.0 $\mu$m.

The resin forming the back layer 23 may be the same as or different from the resin forming the base layer 24, similarly to the resin forming the front layer 22. For example, if the resins forming the back layer 23 and the base layer 24 are polyolefin resins, the polyolefin resin forming the back layer 23 may have a melting temperature lower than that of the polyolefin resin forming the base layer 24. The polyolefin resin used for the back layer 23 may, for example, be those which are mentioned for the polyolefin resin used for the front layer 22.

As shown in Fig. 2, the back layer 23 contains an AB agent 26. The AB agent 26 is dispersed in the back layer 23.

Due to the back layer 23 containing the AB agent 26, convexities derived from the AB agent 26 are locally present on the second surface 20b of the resin substrate 20. These convexities can minimize blocking in the resin substrate 20 or the gas barrier film 200.

The AB agent 26 may be exposed at the second surface 20b, or may be covered with resin.

The AB agent 26 is in the form of solid particles, such as organic particles and inorganic particles. The organic particles may include polymethylmethacrylate particles, polystyrene particles, and polyamide particles. These organic particles can be obtained through, for example, emulsion polymerization, suspension polymerization. The inorganic particles may be silica particles, zeolite, talc, kaolinite, feldspar. These AB agents may be used singly or in combination of two or more. When the AB agent 26 is an organic material, polymethylmethacrylate particles are preferred, and when it is an inorganic material, silica particles are preferred.

The AB agent 26 may typically have an average particle size that is not more than the thickness of the back layer 23. The AB agent 26 is preferred to have an average particle size of 0.1 $\mu$m or more and 5 $\mu$m or less, considering the appearance of the second surface 20b, transparency of the back layer 23, possible loss of the AB agent 26, and anti-blocking performance.

In the gas barrier film 200, the front layer 22 does not contain the AB agent 26. Therefore, it is preferred that high anti-blocking performance is exerted by the AB agent 26 of the back layer 23. From the perspective of anti-blocking performance, the AB agent 26 is particularly preferred to have an average particle size of 2 $\mu$m or more and 5 $\mu$m or less.

The average particle size of the AB agent 26 is measured using the Coulter principle.

The addition amount of the AB agent 26 in the back layer 23 may, for example, be in the range of 0.1 mass% to 0.4 mass% relative to the total mass of the back layer 23.

The addition amount of the AB agent 26 in the back layer 23 can specifically be calculated from the following formula.

$$\text{Addition amount of AB agent [mass\%]} = \{(i)/100\} \times \{(ii)/100\} \times 100$$

In the formula, (i) indicates a concentration (mass%) of the AB agent in masterbatch resin chips in a pellet form obtained by adding an AB agent to a resin, agitating the mixture, and kneading and melt-extruding the agitated mixture using an extruder.

(ii) indicates a concentration (mass%) of the AB agent-containing masterbatch resin chips relative to the total mass of resin pellets forming the back layer 23, when blending the AB agent-containing masterbatch resin chips with a resin that does not contain an AB agent.

The back layer 23 may contain an additive other than an AB agent. The additives may be ones similar to those mentioned above. The content of an additive in the back layer 23 can be appropriately controlled within a range not impairing the advantageous effects of the present invention.

The back layer 23 may have a thickness in the range, for example, of 0.1 $\mu$m to 10 $\mu$m, and more preferably 0.5 $\mu$m to 5.0 $\mu$m.

The thickness of the back layer 23 is a thickness in portions where there are no convexities derived from the AB agent 26.

The resin substrate 20 is preferred to be a coextruded film in which the front layer 22, the back layer 23, and the base layer 24 are laminated by coextrusion.

The resin substrate 20 may be a stretched film or may be an unstretched film.

The resin substrate 20 is preferred to include a biaxially stretched polypropylene film. Biaxially stretched polypropylene films have particularly good water vapor barrier performance. Therefore, including a biaxially stretched polypropylene film can improve water vapor barrier properties of the gas barrier film 200.

The biaxially stretched polypropylene film may be a film obtained by processing at least one of homopolymers, random copolymers, block copolymers. The biaxially stretched polypropylene film is preferred to be a coextruded film.

The resin substrate including a biaxially stretched polyolefin film may be a biaxially stretched polypropylene film, or may be a laminate of a biaxially stretched polypropylene film and other resin films. Examples of other resin films include polyester films such as of polyethylene terephthalate and polyethylene naphthalate; polyolefin films such as of polyethylene; polystyrene films; polyamide films such as of nylon; polycarbonate films, and engineering plastic films such as polyacrylonitrile films and polyimide films.

The thickness of the resin substrate 20 can be controlled according to usage, required characteristics, and may, for example, be in the range of 3 $\mu$m to 200 $\mu$m, and more preferably 6 $\mu$m to 30 $\mu$m, but is not particularly limited to these ranges.

The thickness of the resin substrate 20 is a thickness in portions where there are no convexities derived from the AB agent 26.

The surfaces of the resin substrate 20 (the first and second surfaces 20a and 20b) may be subjected to at least one treatment selected from the group consisting of chemical treatment, solvent treatment, corona treatment, plasma treatment, and ozone treatment.

(Underlayer)

The underlayer 27 is provided between the resin substrate 20 and the inorganic oxide layer 28 or the oxygen barrier coating film 25.

The underlayer 27 is a layer that contains an organic polymer as a main component, and may also be called a primer layer. Provision of the underlayer 27 can improve film-forming properties or adhesion strength of the inorganic oxide layer 28 or the coating film 25.

The organic polymer content of the underlayer 27 may, for example, be 70 mass% or more, or may be 80 mass% or more. The organic polymer may be a polyacrylic resin, polyester resin, polycarbonate resin, polyurethane resin, polyamide resin, polyolefin resin, polyimide resin, melamine resin, phenol resin. From the perspective of hot-water resistance of the adhesion between the resin substrate 20 and the inorganic oxide layer 28 or the coating film 25, the underlayer 27 is preferred to contain at least one of the polyacrylic resin, polyol resin, polyurethane resin, polyamide resin, or a reaction product of these inorganic polymers. The underlayer 27 may contain a silane coupling agent, organic titanate, or modified silicone oil.

The organic polymer is more preferred to be an organic polymer having a urethane bond which is produced by reaction of a polyol having two or more hydroxyl groups at polymer terminals with an isocyanate compound, and/or an organic polymer containing a reaction product of a polyol having two or more hydroxyl groups at polymer terminals and an organosilane compound such as a silane coupling agent or a hydrolysate thereof.

The polyol may, for example, be at least one selected from acrylic polyol, polyvinyl acetal, polystyrene polyol, polyurethane polyol. The acrylic polyol may be obtained by polymerizing an acrylic acid derivative monomer, or may be obtained by copolymerizing an acrylic acid derivative monomer and other monomers. The acrylic acid derivative monomer may be ethyl methacrylate, hydroxyethyl methacrylate, hydroxypropyl methacrylate, hydroxybutyl methacrylate. Monomers copolymerized with the acrylic acid derivative monomer may be styrene.

The isocyanate compound increases adhesion between the resin substrate 20 and the inorganic oxide layer 28 or the coating film 25 due to the urethane bond which is produced by reaction with a polyol. In other words, the isocyanate compound serves as a cross-linking agent or a curing agent. The isocyanate compound may, for example, be a monomer such as aromatic tolylene diisocyanate (TDI), diphenylmethane diisocyanate (MDI), aliphatic xylene diisocyanate (XDI), hexamethylene diisocyanate (HMDI), isophorone diisocyanate (IPDI), and the like, or polymers or derivatives thereof. These isocyanate compounds may be used singly or in combination of two or more.

Examples of the silane coupling agent may include vinyl trimethoxy silane, $\gamma$-chloropropyl methyl dimethoxy silane, y-chloropropyl trimethoxy silane, glycidoxy propyl trimethoxy silane, $\gamma$-methacryloxy propyl trimethoxy silane, and $\gamma$-methacryloxy propyl methyldimethoxy silane. The organosilane compound may be a hydrolysate of these silane coupling agents. The organosilane compound may contain one, or two or more in combination of the above silane coupling agents and hydrolysates thereof.

The underlayer 27 can be formed by preparing a liquid mixture by mixing the above components in an organic solvent in any ratio, and applying the prepared liquid mixture onto the first surface 20a of the resin substrate 20. The liquid mixture may contain, for example, a curing accelerator, antioxidant, leveling agent, viscosity modifier, catalyst, crosslink reaction accelerator, filler. The curing accelerator may be a tertiary amine, imidazole derivative, metal salt compound of carboxylic acid, quaternary ammonium salt, quaternary phosphonium salt, or the like. The antioxidant may be a phenol-, sulfur-, or phosphite-based antioxidant.

The liquid mixture can be applied onto the resin substrate 20 using a known printing method such as offset printing, gravure printing, or silk screen printing, or a known coating method such as roll coating, knife edge coating, or gravure coating. The applied liquid mixture may be heated to, for example, 50°C to 200°C, and dried and/or cured to form an underlayer 27.

The thickness of the underlayer 27 is not particularly limited, but may, for example, be in the range of 0.005 $\mu$m to 5 $\mu$m. The thickness may be controlled according to usage or required characteristics.

The thickness of the underlayer 27 is preferred to be in the range of 0.01 $\mu$m to 1 $\mu$m, and more preferably 0.01 $\mu$m to 0.5 $\mu$m. If the thickness of the underlayer 27 is 0.01 $\mu$m or more, sufficient adhesion strength can be achieved between the resin substrate 20 and the inorganic oxide layer 28 or the coating film 25, enhancing oxygen barrier properties. If the thickness of the underlayer 27 is 1 $\mu$m or less, a uniform coating surface can be easily formed, and drying load and manufacturing cost can be reduced.

(Inorganic oxide layer)

Examples of the components of the inorganic oxide layer 28 may include aluminum oxide, silicon oxide, due to having good productivity, and having good oxygen barrier properties and water vapor barrier properties coupled with high heat resistance and high hot-moisture resistance. The inorganic oxide layer 28 may contain one, or two or more in combination of these components.

The inorganic oxide layer 28 is preferred to have a thickness in the range of 1 nm to 200 nm. If the thickness is 1 nm or more, good oxygen barrier properties and water vapor barrier properties can be achieved. If the thickness is 200 nm or less, manufacturing cost can be reduced, and cracking due to bending or pulling is unlikely to occur, thereby reducing deterioration in barrier properties.

The inorganic oxide layer 28 can be formed using, for example, a known film-forming method, such as vacuum vapor deposition, sputtering, ion plating, or plasma-enhanced chemical vapor deposition (CVD).

(Oxygen barrier coating film)

The coating film 25 may be a film known as an oxygen barrier coating film formed using a wet coating method.

The coating film 25 can be obtained by forming a coating of a coating agent on the underlayer 27 or the inorganic oxide layer 28 using a wet coating method, and drying the coating. It should be noted that a coating refers to a wet film, and a coating film refers to a dry film.

The coating film 25 is preferred to be a coating film containing a metal alkoxide and a hydrolysate thereof, or at least one of reaction products thereof, and a water-soluble polymer (organic-inorganic composite coating film). A coating film further containing a silane coupling agent and/or a hydrolysate thereof is even more preferred.

Examples of the metal alkoxide and a hydrolysate thereof contained in the organic-inorganic composite film may include materials expressed by a general formula $M(OR)_n$, such as tetraethoxysilane $[Si(OC_2H_5)_4]$ and triisopropoxy aluminum $[Al(OC_3H_7)_3]$, and hydrolysates thereof. These materials may be used singly or in combination of two or more.

The total content of the metal alkoxide and a hydrolysate thereof, or at least one of reaction products thereof in the organic-inorganic composite film is preferred to be in the range of 40 mass% to 70 mass%, for example. From the perspective of further reducing oxygen permeability, the lower limit of the total content of the metal alkoxide and a hydrolysate thereof, or at least one of reaction products thereof in the organic-inorganic composite film may be 50 mass%. From the same perspective, the upper limit of the total content of the metal alkoxide and a hydrolysate thereof, or at least one of reaction products thereof in the organic-inorganic composite film may be 65 mass%.

The water-soluble polymer contained in the organic-inorganic composite film is not particularly limited, but may, for example, be a polyvinyl alcohol polymer, a polysaccharide polymer such as of starch, methylcellulose, or carboxyl methylcellulose, or an acrylic polyol polymer. From the perspective of improving oxygen gas barrier properties, the water-soluble polymer is preferred to contain a polyvinyl alcohol polymer. The number average molecular weight of the water-soluble polymer may, for example, be in the range of 40,000 to 180,000.

The polyvinyl alcohol water-soluble polymer can be obtained by, for example, saponification (including partial saponification) of a polyvinyl acetate. **In** this water-soluble polymer, several tens percent of an acetic acid group may remain, or only several percent of an acetic acid group may remain.

The water-soluble polymer content in the organic-inorganic composite film may be in the range, for example, of 15 mass% to 50 mass%. The lower limit of the water-soluble polymer content in the organic-inorganic composite film may be 20 mass% from the perspective of further lowering oxygen permeability. The upper limit of the water-soluble polymer content in the organic-inorganic composite film may be 45 mass% from the perspective of further lowering oxygen permeability.

The silane coupling agent and a hydrolysate thereof contained in the organic-inorganic composite film may be a silane coupling agent having an organic functional group. The silane coupling agent and a hydrolysate thereof may be ethyltrimethoxysilane, vinyltrimethoxysilane, γ-chloropropylmethyldimethoxysilane, γ-chloropropyltrimethoxysilane, glycidoxypropyltrimethoxysilane, γ-methacryloxypropyltrimethoxysilane, γ-methacryloxypropylmethyl dimethoxysilane, and hydrolysates thereof. These materials may be used singly or in combination of two or more.

At least one of the silane coupling agent and a hydrolysate thereof is preferred to contain an epoxy group as an organic functional group. Examples of the silane coupling agent having an epoxy group may include γ-glycidoxypropyltrimethoxysilane and β-(3,4-epoxycyclohexyl) ethyltrimethoxysilane. The silane coupling agent having an epoxy group and a hydrolysate thereof may contain an organic functional group, such as a vinyl group, amino group, methacrylic group, or ureido group, different from the epoxy group.

The silane coupling agent having an organic functional group and a hydrolysate thereof can further improve oxygen barrier properties of the coating film 25 and adhesion to the underlayer 27 or the inorganic oxide layer 28 due to interaction between the organic functional group and the hydroxyl group of the water-soluble polymer. **In** particular, interaction of an epoxy group of the silane coupling agent and a hydrolysate thereof with a hydroxyl group of the polyvinyl alcohol can form a coating film 25 having particularly high oxygen barrier properties and particularly high adhesion to the underlayer 27 or the inorganic oxide layer 28.

The total content of the silane coupling agent and a hydrolysate thereof, or at least one of reaction products thereof in the organic-inorganic composite film, is preferred to be in the range of 1 mass% to 15 mass%, for example. From the perspective of further reducing oxygen permeability, the lower limit of the total content of the silane coupling agent and a hydrolysate thereof, or at least one of reaction products thereof, in the organic-inorganic composite film may be 2 mass%. From the same perspective, the upper limit of the total content of the silane coupling agent and a hydrolysate thereof, or at least one of reaction products thereof, in the organic-inorganic composite film may be 12 mass%.

The organic-inorganic composite film may contain a crystalline inorganic laminar compound having a laminar structure. The inorganic laminar compound may, for example, be a clay mineral represented such as by kaolinite, smectite, and mica. These compounds may be used singly or in combination of two or more. The inorganic laminar compound may have a particle size in the range, for example, of 0.1 $\mu$m to 10 $\mu$m. The inorganic laminar compound may have an aspect ratio in the range, for example, of 50 to 5,000.

As the inorganic laminar compound, a smectite clay mineral is preferred because of being able to form a coating film having good oxygen barrier properties and high adhesion strength due to insertion (intercalation) of a water-soluble polymer between layers of the laminar structure. Specific examples of the smectite clay mineral may include montmorillonite, hectorite, saponite, and water-swellable synthetic mica.

Furthermore, another preferred example of the oxygen barrier coating film 25 may be a coating film containing a polyvalent metal salt of a carboxylic acid which is a reaction product of a carboxyl group of a polycarboxylic acid polymer (A) and a polyvalent metal compound (B) (polyvalent metal salt coating film of a polycarboxylic acid). In this case, the coating film may be a polyvalent metal salt coating film of a polycarboxylic acid obtained by applying, heating, and drying a coating agent that is a mixture of a polycarboxylic acid polymer (A) and a polyvalent metal compound (B), or may be a polyvalent metal salt coating film of a polycarboxylic acid obtained by forming an A coating film by applying and drying a coating agent containing a polycarboxylic acid polymer (A) as a main component, and then forming a B coating film on the A coating film by applying and drying a coating agent containing a polyvalent metal compound (B) as a main component, followed by allowing a cross-linking reaction to occur between the A layer and the B layer.

[Polycarboxylic acid polymer (A)]

The polycarboxylic acid polymer refers to a polymer having two or more carboxyl groups per molecule. Examples of such a polycarboxylic acid polymer may include ethylenically unsaturated carboxylic acid (co)polymers; copolymers of an ethylenically unsaturated carboxylic acid and other ethylenically unsaturated monomers; and acid polysaccharides, such as alginic acid, carboxymethyl cellulose, and pectin, having a carboxyl group in a molecule.

The ethylenically unsaturated carboxylic acid may, for example, be acrylic acid, methacrylic acid, itaconic acid, maleic acid, fumaric acid, crotonic acid.

Examples of the ethylenically unsaturated monomer that can copolymerize with the ethylenically unsaturated carboxylic acid may include saturated carboxylic acid vinyl esters such as ethylene, propylene, and vinyl acetate, alkyl acrylates, alkyl methacrylates, alkyl itaconates, vinyl chloride, vinylidene chloride, styrene, acryl amide, and acrylonitrile.

These polycarboxylic acid polymers may be used singly or as a mixture of two or more.

From the perspective of gas barrier properties of the gas barrier film to be obtained, the component may be a polymer containing structural units derived from at least one polymerizable monomer selected from the group consisting of acrylic acid, maleic acid, methacrylic acid, itaconic acid, fumaric acid, and crotonic acid. The component is particularly preferred to be a polymer containing structural units derived from at least one polymerizable monomer selected from the group consisting of acrylic acid, maleic acid, methacrylic acid, and itaconic acid.

In the above polymer, the ratio of the structural units derived from at least one polymerizable monomer selected from the group consisting of acrylic acid, maleic acid, methacrylic acid, and itaconic acid is preferred to be 80 mol% or more, and more preferred to be 90 mol% or more (the total structural units configuring the polymer is taken to be 100 mol%).

The above polymer may be a homopolymer, or may be a copolymer.

If the polymer is a copolymer containing second structure units other than the above structural units, the second structural units may, for example, be structural units derived from the ethylenically unsaturated monomer copolymerizable with an ethylenically unsaturated carboxylic acid, as mentioned above.

The polycarboxylic acid polymer is preferred to have a number average molecular weight in the range of 2,000 to 10,000,000, and more preferably in the range of 5,000 to 1,000,000. If the number average molecular weight is less than 2,000, the gas barrier film to be obtained cannot achieve sufficient water resistance, and moisture may deteriorate gas barrier properties or transparency or may cause blushing. If the number average molecular weight exceeds 10,000,000, viscosity of the coating agent when forming the coating film 25 may become high, impairing coatability.

The number average molecular weight is obtained using gel permeation chromatography (GPC) in terms of polystyrene.

When forming a B coating film after forming an A coating film by applying and drying a coating agent containing a polycarboxylic acid polymer (A) as a main component, part of the carboxyl group of the polycarboxylic acid polymer may be neutralized in advance with a basic compound. Neutralization of part of the carboxyl group of the polycarboxylic acid polymer in advance can further improve water resistance or heat resistance of the A coating film.

The basic compound is preferred to be at least one basic compound selected from the group consisting of a polyvalent metal compound, a monovalent metal compound, and ammonia.

The polyvalent metal compound may be a compound exemplified in the description of the polyvalent metal compound (B) provided below. The monovalent metal compound may, for example, be sodium hydroxide, potassium hydroxide.

The coating agent containing a polycarboxylic acid polymer (A) as a main component may be mixed with various additives, such as a cross-linking agent, curing agent, leveling agent, antifoam agent, anti-blocking agent, antistatic agent, dispersant, surfactant, softener, stabilizer, film-forming agent, and viscosity modifying agent, as long as the barrier performance is not impaired.

A solvent used for the coating agent containing a polycarboxylic acid polymer (A) as a main component is preferred to be an aqueous medium. The aqueous medium may be water, a water-soluble or hydrophilic organic solvent, or a mixture of these materials. Aqueous media generally contain water, or contain water as a main component.

Such an aqueous medium is preferred to have a water content of 70 mass% or more, and more preferably 80 mass% or more.

Examples of the water-soluble or hydrophilic organic solvent may include alcohols such as methanol, ethanol, and isopropanol; ketones such as acetone and methyl ethyl ketone; ethers such as tetrahydrofuran; cellosolves; carbitols; and nitriles such as acetonitriles.

<Polyvalent metal compound (B)>

The polyvalent metal compound is not particularly limited as long as it reacts with a carboxyl group of a polycarboxylic acid polymer and forms a polyvalent metal salt of a polycarboxylic acid, and may include zinc oxide particles, magnesium oxide particles, magnesium methoxide, copper oxide, and calcium carbonate. These materials may be used singly or as a mixture of two or more. The polyvalent metal compound is preferred to use zinc oxide from the perspective of oxygen barrier properties of the oxygen barrier coating film.

Zinc oxide is an inorganic material having a UV absorption function. The average particle size of the zinc oxide particles is not particularly limited. From the perspective of gas barrier properties, transparency, and coating suitability, the average particle size of the zinc oxide particles is preferred to be 5 $\mu$m or less, more preferred to be 1 $\mu$m or less, and even more preferred to be 0.1 $\mu$m or less.

If a B coating film is formed by applying and drying a coating agent containing a polyvalent metal compound (B) as a main component, various additives may be added, as necessary, to the zinc oxide particles as long as the advantageous effects of the present invention are not impaired. The additives may be a resin which is soluble or dispersible in a solvent used for the coating agent, and may be a dispersant, surfactant, softener, stabilizer, film-forming agent, thickener, which are soluble or dispersible in the solvent.

Of these additives, the coating agent is preferred to contain a resin which is soluble or dispersible in a solvent used for the coating agent. This may improve coatability and film formability of the coating agent. Examples of such a resin may include an alkyd resin, melamine resin, acrylic resin, urethane resin, polyester resin, phenol resin, amino resin, fluororesin, epoxy resin, and isocyanate resin.

Furthermore, the coating agent is preferred to contain a dispersant which is soluble or dispersible in a solvent used for the coating agent. This may improve dispersibility of the polyvalent metal compound. The dispersant may be an anionic surfactant or a nonionic surfactant. Such surfactants may include various surfactants such as a (poly)carboxylic acid salt, alkyl sulfate ester salt, alkylbenzene sulfonic acid salt, alkylnaphthalene sulfonic acid salt, alkylsulfosuccinic acid salt, alkyl diphenyl ether disulfonic acid salt, alkyl phosphate salt, aromatic phosphate ester, polyoxyethylene alkyl ether, polyoxyethylene alkyl phenol ether, polyoxyethylene alkyl ester, alkylaryl sulfate ester salt, polyoxyethylene alkyl phosphate ester, sorbitan alkyl ester, glycerol fatty acid ester, sorbitan fatty acid ester, sucrose fatty acid ester, polyethylene glycol fatty acid ester, polyoxyethylene sorbitan alkyl ester, polyoxyethylene alkylaryl ether, polyoxyethylene derivative, polyoxyethylene sorbitol fatty acid ester, polyoxy fatty acid ester, and polyoxyethylene alkylamine. These surfactants may be used singly or as a mixture of two or more.

If the coating agent containing the polyvalent metal compound (B) as a main component contains an additive, the mass ratio of the polyvalent metal compound to the additive (polyvalent metal compound: additive) is preferred to be in the range of 30:70 to 99:1, and more preferably 50:50 to 98:2.

Examples of the solvent used for the coating agent containing a polyvalent metal compound (B) as a main component may include water, methyl alcohol, ethyl alcohol, isopropyl alcohol, n-propyl alcohol, n-butyl alcohol, n-pentyl alcohol, dimethyl sulfoxide, dimethylformamide, dimethylacetamide, toluene, hexane, heptane, cyclohexane, acetone, methyl ethyl ketone, diethyl ether, dioxane, tetrahydrofuran, ethyl acetate, and butyl acetate. These solvents may be used singly or as a mixture of two or more.

Of these solvents, methyl alcohol, ethyl alcohol, isopropyl alcohol, toluene, ethyl acetate, methyl ethyl ketone, or water is preferred from the perspective of coatability. From the perspective of manufacturability, the solvent is preferred to be methyl alcohol, ethyl alcohol, isopropyl alcohol, or water.

If a polyvalent metal salt coating film of a polycarboxylic acid is formed by applying and drying a coating agent that is a mixture of a polycarboxylic acid polymer (A) and a polyvalent metal compound (B), the polycarboxylic acid polymer (A) and the polyvalent metal compound (B) may be mixed with a resin or a dispersant which is soluble or dispersible in water or an alcohol as a solvent, or mixed with an additive, as necessary, for use as a coating agent, and the coating agent may be applied using a known coating method and dried to form the polyvalent metal salt coating film of a polycarboxylic acid. The coating method may, for example, be casting, dipping, roll coating, gravure coating, screen printing, reverse coating, spray coating, kit coating, die coating, metering bar coating, combined chamber and doctor coating, curtain coating.

The thickness of the oxygen barrier coating film 25 is determined according to required oxygen barrier properties, and may, for example, be in the range of 0.05 $\mu$m to 5 $\mu$m.

The thickness of the coating film 25 is preferred to be in the range of 0.05 $\mu$m to 1 $\mu$m, and more preferably 0.1 $\mu$m to 0.5 $\mu$m. If the thickness of the coating film 25 is 0.05 $\mu$m or more, sufficient oxygen barrier properties may be easily achieved. If the thickness of the coating film 25 is 1 $\mu$m or less, oxygen barrier properties on the first surface 20a may be greatly affected by the presence or absence of the convexities derived from the AB agent, and usefulness of the present invention may be enhanced. If the thickness of the coating film 25 is 1 $\mu$m or less, a uniform coating surface can be easily formed, and drying load and manufacturing cost can be reduced.

The gas barrier film having the organic-inorganic composite coating film or the polyvalent metal salt coating film of a polycarboxylic acid as a gas barrier coating film retains good oxygen barrier properties even when the film is subjected to boiling treatment or retort sterilization treatment. Accordingly, if a sealant film is laminated on the gas barrier film for use as a packaging material for boiling and retort treatment, sufficient adhesion strength or sealing strength can be exhibited. Furthermore, the gas barrier film has advantageous effects such as having high transparency, bending resistance, and stretch resistance which are not found in metal foil or vapor deposited metal films, and having no risk of generating harmful substances such as dioxins.

(Method of producing gas barrier film)

The gas barrier film 200 can be produced by forming an underlayer 27 or an inorganic oxide layer 28, or forming both an underlayer 27 and an inorganic oxide layer 28 on the first surface 20a of the resin substrate 20, followed by forming an oxygen barrier coating film 25 on the underlayer 27 or the inorganic oxide layer 28.

The resin substrate 20 may be a commercially available resin substrate, or may be a resin substrate produced using a known method.

As described above, the underlayer 27 can be obtained by forming a coating film of a coating agent on the first surface 20a of the resin substrate 20 using a wet coating method, and drying the coating film.

The wet coating method may be a known wet coating method, such as roll coating, gravure coating, reverse coating, die coating, screen printing, or spray coating.

The method of drying the coating film of the coating agent may be a known drying method, such as hot-air drying, hot-roll drying, or infrared radiation. Drying conditions may be 90°C and 10 seconds, for example.

The inorganic oxide layer 28 can be formed on the first surface 20a of the resin substrate 20 or the underlayer 27 using a method such as vacuum vapor deposition, sputtering, ion plating, or plasma-enhanced chemical vapor deposition (CVD).

The oxygen barrier coating film 25 can be obtained by forming a coating of the coating agent mentioned above on the underlayer 27 or the inorganic oxide layer 28 using a wet coating method, and drying the coating.

The wet coating method may be a known wet coating method, such as roll coating, gravure coating, reverse coating, die coating, screen printing, or spray coating.

The method of drying the coating film of the coating agent may be a known drying method, such as hot-air drying, hot-roll drying, or infrared radiation. Drying conditions may be 90°C and 10 seconds, for example.

The oxygen barrier coating film 25 may be formed through one-time application and drying, or may be formed through a plurality of times of application and drying using the same coating agent or different coating agents.

If convexities of an AB agent are present on a surface of a resin substrate, the convexities are present on both surfaces (first and second surfaces) of the resin substrate. It is considered that the inorganic oxide layer or the oxide barrier coating film may locally suffer from defects at the positions of the convexities forming passages for gas permeation, and that barrier properties may not be sufficiently exhibited.

(Advantageous effects)

In the gas barrier film 200, since the front layer 22 does not contain an AB agent, no convexities that would be caused by the AB agent are present on the first surface 20a, preventing the occurrence of defects in the inorganic oxide layer 28 and the coating film 25 which would otherwise have been caused by the convexities. This is considered to be why intrinsic barrier properties can be sufficiently exhibited.

Furthermore, in the present embodiment, blocking can be minimized in the resin substrate 20 or in the gas barrier film 200 due to the back layer 23 containing an AB agent. In this case, if the base layer 21 has a thickness larger than the particle size of the AB agent, the base layer can sufficiently prevent the front layer from forming concavities and convexities affected by the AB agent. Accordingly, the occurrence of defects and blocking can both be minimized at a high level in the inorganic oxide layer 28 and the coating film 25.

The configurations and combinations of the configurations in the embodiment are only examples.

For example, the back layer 23 does not have to contain the AB agent 26. From the perspective of producing the resin substrate 20 or handleability of the gas barrier film 200, the back layer 23 is preferred to contain the AB agent 26.

The gas barrier film may further include, as necessary, a print layer, anchor coat layer, overcoat layer, light-shielding layer, adhesive layer, heat-sealable layer, and other functional layers.

If the gas barrier film includes a heat-sealable layer, the heat-sealable layer may be located on at least one outermost surface of the gas barrier film. The gas barrier film, if it includes a heat-sealable layer, can hermetically achieve heat sealing.

The heat-sealable layer can be laminated, for example, using a known adhesive such as a polyurethane-, polyester-, or polyether-based adhesive using a known dry lamination method, extrusion lamination method. The heat-sealable layer may be laminated on the second surface 20b of the resin substrate 20, or may be laminated on the coating film 25.

[Examples]

The present invention will be further described in detail through examples and comparative examples. It should be noted that the present invention should not be construed as being limited to the following examples. Examples 4-6 and 11-13 are not according to the present invention as defined in the claims.

<Preparation Example 1>

45.5 g of meta-xylylene diisocyanate (also be termed mXDI hereinafter), 93.9 g of 1,3-bis(isocyanato methyl) cyclohexane (also be termed hydrogenated XDI hereinafter), 24.8 g of ethylene glycol, 13.4 g of dimethylolpropionic acid, and 80.2 g of methyl ethyl ketone as a solvent were mixed together, followed by reaction in a nitrogen atmosphere at 70°C for 5 hours to prepare a carboxyl group-containing urethane prepolymer solution.

Next, this carboxyl group-containing urethane prepolymer solution was neutralized with 9.6 g of triethylamine at 40°C. The carboxyl group-containing urethane prepolymer solution was dispersed in 624.8 g of water using a Homodisper, followed by chain extension reaction with 21.1 g of 2-[(2-aminoethyl) amino]ethanol and distilling off of the methyl ethyl ketone to obtain a water dispersion of an acid group-containing polyurethane resin having a solid content of 25 mass%, an average particle size of 90 nm, and an acid value of 26.9 mgKOH/g.

Next, the water dispersion of the acid group-containing polyurethane resin was mixed with $\gamma$-(2-aminoethyl) aminopropyl methyl dimethoxysilane (amine value 544 mgKOH/g) as a polyamine compound so that a molar ratio between the acid group and the basic nitrogen atoms would be 1/1, thereby obtaining an aqueous polyurethane resin of Production Example 1.

<Preparation Example 2>

The aqueous polyurethane resin of Preparation Example 1 was used as an aqueous polyurethane resin containing an acid-group containing polyurethane resin and a polyamine compound (also termed component (C) hereinafter).

A polyvinyl alcohol resin (product name: Poval PVA-105 manufactured by Kuraray Co., Ltd., a polyvinyl alcohol with a saponification degree of 98% to 99% and a polymerization degree of 500) was used as a water-soluble polymer (also termed component (D) hereinafter).

A water-swellable synthetic mica (Somasif MEB-3 manufactured by Co-op Chemical Co, Ltd.) was used as an inorganic laminar mineral (also termed component (E) hereinafter).

The components (C), (D) and (E) were formulated at a solid content ratio shown in Table 1 and heated and mixed at 80°C, followed by cooling down to room temperature. The mixture was then diluted with ion exchanged water and isopropanol so that 10 mass% of the solvent would be isopropanol and the final solid concentration would be 9 mass%, followed by adding water-soluble polyisocyanate (Takenate WD-725 manufactured by Mitsui Chemicals, Inc.) as a curing agent (also termed component (F) hereinafter), thereby preparing a coating agent. It should be noted that the component (F) was added immediately before application of the coating agent in Examples 1 to 3 and Comparative Examples 1 and 2 described below.

[Table 1]

|  | Component (C) | Component (D) | Component (E) | Component (F) |
|---|---|---|---|---|
| Mixing ratio (mass%) | 7 | 80 | 8 | 5 |

<Example 1>

A biaxially stretched polypropylene film A with a thickness of 20 $\mu$m was used as a resin substrate. The biaxially stretched polypropylene film A was a coextruded film having a total of 5 layers in which 1 front layer (thickness 1 $\mu$m) / 3 base layers (thickness 18 $\mu$m) / 1 back layer (thickness 1 $\mu$m) were laminated in this order. Only a first surface (front layer-side surface) of the biaxially stretched polypropylene film A was corona treated. Silica particles with an average particle size of 4 $\mu$m were added as an AB agent to the back layer so as to be 2,000 ppm relative to the total mass of the back layer.

The coating agent of Preparation Example 2 was applied to the first surface of the resin substrate using a gravure printing machine to form a coating film. The resin substrate was passed through an oven at 90°C for 10 seconds to dry the coating and form a coating film, thereby obtaining a gas barrier film of Example 1.

<Example 2>

A resin substrate similar to one used in Example 1 was coated, with the application quantity of the coating agent increased to make the coating film thicker than Example 1, thereby obtaining a gas barrier film of Example 2.

<Example 3>

A resin substrate similar to one used in Example 1 was coated, with the application quantity of the coating agent decreased to make the coating film thinner than Example 1, thereby obtaining a gas barrier film of Example 3.

<Comparative Example 1>

A biaxially stretched polypropylene film B with a thickness of 20 $\mu$m was used as a resin substrate. The biaxially stretched polypropylene film B was a coextruded film having a total of 5 layers in which 1 front layer (thickness 1 $\mu$m) / 3 base layers (thickness 18 $\mu$m) / 1 back layer (thickness 1 $\mu$m) were laminated in this order. Only a first surface (front layer-side surface) of the biaxially stretched polypropylene film B was corona treated. Polymethylmethacrylate (PMMA) particles with an average particle size of 4 $\mu$m were added as an AB agent to the front layer so as to be 1,500 ppm relative to the total mass of the front layer. Silica particles with an average particle size of 4 $\mu$m were added as an AB agent to the back layer so as to be 2,000 ppm relative to the total mass of the back layer.

The coating agent of Preparation Example 2 was applied to the first surface of the resin substrate using a gravure printing machine to form a coating film. The resin substrate was passed through an oven at 90°C for 10 seconds to dry the coating and form a coating film, thereby obtaining a gas barrier film of Comparative Example 1.

<Comparative Example 2>

A resin substrate similar to one used in Comparative Example 1 was coated, with the application quantity of the coating agent increased to make the coating film thicker than Comparative Example 1, thereby obtaining a gas barrier film of Comparative Example 2.

<Evaluation>

Oxygen barrier properties

For the gas barrier films of Examples 1 to 3 and Comparative examples 1 and 2, oxygen permeability (OTR) (cc/(m$^2$·day·atm)) was measured using an oxygen permeability measuring device (product name: OXTRAN-2/20 manufactured by Mocon Inc.) in an atmosphere of 30°C and 60% RH. The results are shown in Table 2.

Water vapor barrier properties

For the gas barrier films of Examples 1 to 3 and Comparative Examples 1 and 2, water vapor permeability (WVTR) (g/(m$^2$·day)) was measured using a water vapor permeability measuring device (product name: PERMATRAN-W-3/33 manufactured by MOCON, Inc.) in an atmosphere of 40°C and 90% RH. The results are shown in Table 2.

Coating film thickness

For the gas barrier films of Examples 1 to 3 and Comparative Examples 1 and 2, the coating film thickness was measured using a scanning electron microscope (product name: JSM6700F manufactured by JEOL Ltd.). The results are shown in Table 2.

[Table 2] In row 3 the disclosure Front layer AB agent should be Back layer AB agent

| | | Ex. 1 | Ex. 2 | Ex. 3 | Comp. Ex. 1 | Comp. Ex. 2 |
|---|---|---|---|---|---|---|
| Front layer AB agent | Addition amount (ppm) | 0 | 0 | 0 | 1,500 | 1,500 |
| | Material | - | - | - | PMMA | PMMA |
| | Average particle size ($\mu$m) | - | - | - | 4 | 4 |
| Front layer AB agent | Addition amount (ppm) | 2,000 | 2,000 | 2,000 | 2,000 | 2,000 |
| | Material | Silica | Silica | Silica | Silica | Silica |
| | Average particle size ($\mu$m) | 4 | 4 | 4 | 4 | 4 |
| Coating film | Thickness ($\mu$m) | 0.45 | 0.7 | 0.3 | 0.45 | 1 |
| Oxygen barrier properties (cc/(m$^2$-day-atm)) | | 0.8 | 0.7 | 1.2 | 3.0 | 1.3 |
| Water vapor barrier properties (g/(m$^2$-day)) | | 4.5 | 4.4 | 4.5 | 4.4 | 4.5 |

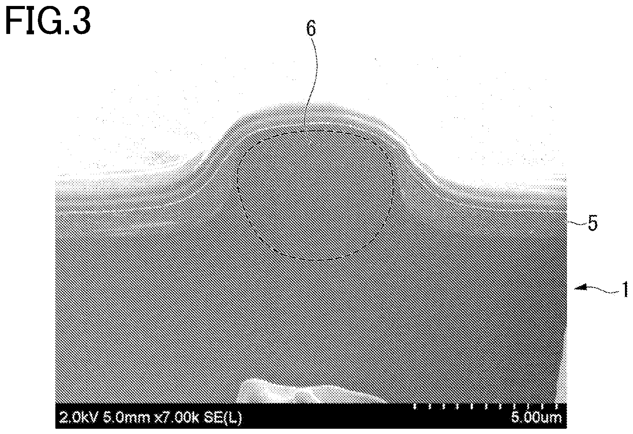

As shown in Table 2, the gas barrier films of Examples 1 to 3 exhibited good oxygen barrier properties. In particular, Example 1 exhibited oxygen barrier properties equivalent to Example 2, although the coating of the former was thinner than the latter.
The gas barrier film of Comparative Example 1 containing an AB agent in the front layer of the resin substrate exhibited oxygen gas barrier properties poorer than Examples 1 to 3.
The gas barrier film of Comparative Example 2 was improved in oxygen barrier properties compared to Comparative Example 1 due to having a coating film thicker than Comparative Example 1, but the oxygen barrier properties were poorer than Examples 1 and 2. Fig. 3 shows a cross-sectional image of the gas barrier film of Comparative Example 2 obtained using a scanning electron microscope (SEM). As can be seen, cracking had occurred locally due to the presence of the AB agent 6 in the front layer, in spite of a thick film coating film 5 being formed.
The following examples and comparative examples are related to the second embodiment.

<Preparation Example 3>

As an acrylic polyol, Acrydic CL-1000 (manufactured by DIC Corporation) was used. As an isocyanate compound, TDI type curing agent Coronate 2030 (manufactured by Tosoh Corporation) was used. These acrylic polyol and isocyanate compound were mixed such that a solid content weight ratio would be 6:4. Using a diluting solvent (ethyl acetate), this mixture was prepared into a liquid mixture A for forming an underlayer (solid content: 2 mass%).

<Preparation Example 4>

An aqueous solution was prepared by hydrolyzing a solution containing a polyvinyl alcohol resin (PVA, product name: Poval PVA-105 manufactured by Kuraray Co., Ltd., a polyvinyl alcohol with a saponification degree of 98% to 99% and a polymerization degree of 500), tetraethoxysilane (TEOS), and $\gamma$-glycidoxypropyltrimethoxysilane (GPTMS, product name: KBM-403 manufactured by Shin-Etsu Chemical Co., Ltd.) with 0.02 mol/L hydrochloric acid. In this aqueous solution, PVA, TEOS and GPTM were mixed at a ratio of 40:50:10 that was a weight ratio before hydrolysis. As a diluting solvent, isopropyl alcohol was added to this aqueous solution so that the weight ratio of the solvent components, i.e., water and isopropyl alcohol, would be 90:10, thereby preparing a coating agent B (5 mass%).

<Example 4>

A biaxially stretched polypropylene film A with a thickness of 20 $\mu$m was used as a resin substrate, and only a first surface (front layer-side surface) thereof was corona treated. Silica particles with an average particle size of 4 $\mu$m were added as an AB agent to the back layer so as to be 2,000 ppm relative to the total mass of the back layer.
The liquid mixture A of Preparation Example 3 was applied to the first surface of the resin substrate using a gravure printing machine to form a coating film, which was then passed through an oven at 100°C for 10 seconds for drying, thereby forming an underlayer with a thickness of 0.1 $\mu$m. Then, the coating agent B of Preparation Example 4 was applied onto the underlayer as formed, using a gravure printing machine to form a coating film, which was then passed through an oven at 100°C for 10 seconds for drying, thereby obtaining a gas barrier film of Example 4.

<Example 5>

A gas barrier film of Example 5 was obtained as in Example 4, except that the coating film was made thicker than Example 4 by increasing the application quantity of the coating agent B.

<Example 6>

A gas barrier film of Example 6 was obtained as in Example 4, except that the coating film was made thinner than Example 4 by decreasing the application quantity of the coating agent B.

<Example 7>

The liquid mixture A of Preparation Example 3 was applied to the first surface of a resin substrate similar to one used in Example 4, using a gravure printing machine to form a coating film, which was then passed through an oven at 100°C for 10 seconds for drying, thereby forming an underlayer with a thickness of 0.1 $\mu$m. Then, aluminum was evaporated with introduction of oxygen gas thereto to deposit aluminum oxide on the underlayer as formed, using a vacuum vapor deposition device operating according to an electron beam heating method, thereby forming an inorganic oxide layer with a thickness of 20 nm. Furthermore, the coating agent B of Preparation Example 4 was applied onto the inorganic oxide layer as formed, using a gravure printing machine to form a coating film, which was then passed through an oven at 100°C for 10 seconds for drying, thereby preparing a gas barrier film of Example 7.

<Example 8>

A gas barrier film of Example 8 was obtained as in Example 7, except that the coating film was made thicker than Example 7 by increasing the application quantity of the coating agent B.

<Example 9>

A gas barrier film of Example 9 was obtained as in Example 7, except that the coating film was made thinner than Example 7 by decreasing the application quantity of the coating agent B.

<Example 10>

Aluminum was evaporated with introduction of oxygen gas thereto to deposit aluminum oxide on the first surface of a resin substrate similar to one used in Example 4, using a vacuum vapor deposition device operating according to an electron beam heating method, thereby forming an inorganic oxide layer with a thickness of 20 nm. Furthermore, the coating agent B of Preparation Example 4 was applied onto the inorganic oxide layer as formed, using a gravure printing machine to form a coating film, which was then passed through an oven at 100°C for 10 seconds for drying, thereby preparing a gas barrier film of Example 10.

<Comparative Example 3>

A biaxially stretched polypropylene film B with a thickness of 20 $\mu$m was used as a resin substrate, and only a first surface (front layer-side surface) thereof was corona treated. Polymethylmethacrylate (PMMA) particles with an average particle size of 4 $\mu$m were added as an AB agent to the front layer so as to be 1,500 ppm relative to the total mass of the front layer. Silica particles with an average particle size of 4 $\mu$m were added as an AB agent to the back layer so as to be 2,000 ppm relative to the total mass of the back layer.

The liquid mixture A of Preparation Example 3 was applied to the first surface of the resin substrate using a gravure printing machine to form a coating film, which was then passed through an oven at 100°C for 10 seconds for drying, thereby forming an underlayer with a thickness of 0.1 $\mu$m. Then, the coating agent B of Preparation Example 4 was applied onto the underlayer as formed, using a gravure printing machine to form a coating film, which was then passed through an oven at 100°C for 10 seconds for drying, thereby obtaining a gas barrier film of Comparative Example 3.

<Comparative Example 4>

A gas barrier film of Comparative Example 4 was obtained as in Comparative Example 3, except that the coating film was made thicker than Comparative Example 3 by increasing the application quantity of the coating agent B.

<Comparative Example 5>

A gas barrier film of Comparative Example 5 was obtained as in Comparative Example 3, except that the coating film was made thinner than Comparative Example 3 by decreasing the application quantity of the coating agent B.

<Comparative Example 6>

The liquid mixture A of Preparation Example 3 was applied to the first surface of a resin substrate similar to one used in Comparative Example 3, using a gravure printing machine to form a coating film, which was then passed through an oven at 100°C for 10 seconds for drying, thereby forming an underlayer with a thickness of 0.1 $\mu$m. Then, aluminum was evaporated with introduction of oxygen gas thereto to deposit aluminum oxide on the underlayer as formed, using a vacuum vapor deposition device operating according to an electron beam heating method, thereby forming an inorganic oxide layer with a thickness of 20 nm. Furthermore, the coating agent B of Preparation Example 4 was applied onto the inorganic oxide layer as formed, using a gravure printing machine to form a coating film, which was then passed through an oven at 100°C for 10 seconds for drying, thereby preparing a gas barrier film of Comparative Example 6.

<Comparative Example 7>

A gas barrier film of Comparative Example 7 was obtained as in Comparative Example 6, except that the coating film was made thicker than Comparative Example 6 by increasing the application quantity of the coating agent B.

<Comparative Example 8>

Aluminum was evaporated with introduction of oxygen gas thereto to deposit aluminum oxide on the first surface of a resin substrate similar to one used in Comparative Example 3, using a vacuum vapor deposition device operating according to an electron beam heating method, thereby forming an inorganic oxide layer with a thickness of 20 nm. Furthermore, the coating agent B of Preparation Example 4 was applied onto the inorganic oxide layer as formed, using a gravure printing machine to form a coating film, which was then passed through an oven at 100°C for 10 seconds for drying, thereby obtaining a gas barrier film of Comparative Example 8.

<Evaluation>

Oxygen barrier properties

For the gas barrier films of Examples 4 to 10 and Comparative examples 3 to 8, oxygen permeability (OTR) (cc/(m$^2$·day·atm)) was measured using an oxygen permeability measuring device (product name: OXTRAN-2/20 manufactured by Mocon Inc.) in an atmosphere of 30°C and 70% RH.

Water vapor barrier properties

For the gas barrier films of Examples 4 to 10 and Comparative Examples 3 to 8, water vapor permeability (WVTR) (g/(m$^2$·day)) was measured using a water vapor permeability measuring device (product name: PERMATRAN-W-3/33 manufactured by MOCON, Inc.) in an atmosphere of 40°C and 90% RH.

Coating film thickness

For the gas barrier films of Examples 4 to 10 and Comparative Examples 3 to 8, the coating film thickness was measured using a scanning electron microscope (product name: JSM6700F manufactured by JEOL Ltd.).

Table 3 shows the results of evaluation for the examples and Table 4 shows the results of evaluation for the comparative examples. In table 3 and 4, in row 3 the disclosure Front layer AB agent should be Back layer AB agent

[Table 3]

| | | Ex. 4 | Ex. 5 | Ex. 6 | Ex. 7 | Ex. 8 | Ex. 9 | Ex. 10 |
|---|---|---|---|---|---|---|---|---|
| Front layer AB agent | Addition amount (ppm) | 0 | 0 | 0 | 0 | 0 | 0 | 0 |
| | Material | - | - | - | - | - | - | - |
| | Average particle size ($\mu$m) | - | - | - | - | - | - | - |
| Front layer AB agent | Addition amount (ppm) | 2,000 | 2,000 | 2,000 | 2,000 | 2,000 | 2,000 | 2,000 |
| | Material | Silica | Silica | Silica | Silica | Silica | Silica | Silica |
| | Average particle size ($\mu$m) | 4 | 4 | 4 | 4 | 4 | 4 | 4 |
| Underlayer | | Provided | Provided | Provided | Provided | Provided | Provided | Not provided |
| Inorganic oxide layer | | - | - | - | Aluminum oxide | Aluminum oxide | Aluminum oxide | Aluminum oxide |
| Coating film | Thickness ($\mu$m) | 0.35 | 0.7 | 0.2 | 0.35 | 0.7 | 0.2 | 0.35 |
| Oxygen barrier properties (cc/(m$^2$-day-atm)) | | 1.7 | 1.4 | 2.5 | 0.8 | 0.6 | 0.9 | 1.2 |
| Water vapor barrier properties (g/(m$^2$-day)) | | 4.3 | 4.2 | 4.3 | 1.2 | 1.0 | 1.3 | 2.1 |

[Table 4]

| | | Comp. Ex. 3 | Comp. Ex. 4 | Comp. Ex. 5 | Comp. Ex 6 | Comp. Ex. 7 | Comp. Ex. 8 |
|---|---|---|---|---|---|---|---|
| Front layer AB agent | Addition amount (ppm) | 1,500 | 1,500 | 1,500 | 1,500 | 1,500 | 1,500 |
| | Material | PMMA | PMMA | PMMA | PMMA | PMMA | PMMA |
| | Average particle size ($\mu$m) | 4 | 4 | 4 | 4 | 4 | 4 |

(continued)

| | | Comp. Ex. 3 | Comp. Ex 4 | Comp. Ex 5 | Comp. Ex 6 | Comp. Ex. 7 | Comp. Ex. 8 |
|---|---|---|---|---|---|---|---|
| Front layer AB agent | Addition amount (ppm) | 2,000 | 2,000 | 2,000 | 2,000 | 2,000 | 2,000 |
| | Material | Silica | Silica | Silica | Silica | Silica | Silica |
| | Average particle size ($\mu$m) | 4 | 4 | 4 | 4 | 4 | 4 |
| Underlayer | | Provided | Provided | Provided | Provided | Provided | Not provided |
| Inorganic oxide layer | | - | - | - | Aluminum oxide | Aluminum oxide | Aluminum oxide |
| Coating film | Thickness ($\mu$m) | 0.35 | 1.0 | 0.2 | 0.35 | 1.0 | 0.35 |
| Oxygen barrier properties (cc/(m$^2$-day-atm)) | | 4.8 | 3.6 | 9.8 | 2.0 | 1.6 | 3.2 |
| Water vapor barrier properties (g/(m$^2$-day)) | | 4.4 | 4.3 | 4.4 | 1.8 | 1.7 | 2.0 |

As shown in Table 3, the gas barrier films of Examples 4 to 10 exhibited good oxygen barrier properties. In particular, Examples 4 and 7 exhibited oxygen barrier properties equivalent to respective Examples 5 and 8, although the coating films of the former were thinner than the latter.

The gas barrier film of Comparative Example 3 containing an AB agent in the front layer of the resin substrate exhibited oxygen gas barrier properties poorer than Examples 4 to 6.

The gas barrier film of Comparative Example 4 was improved in oxygen barrier properties compared to Comparative Example 3 due to having a coating film thicker than Comparative Example 3, but the oxygen barrier properties were poorer than Examples 4 to 6.

The oxygen barrier properties of the gas barrier film of Comparative Example 5 were deteriorated due to having a coating film thinner than that of Comparative Example 3, and were much poorer than Examples 4 to 6.

The gas barrier films of Comparative Examples 6 to 8 had oxygen barrier properties poorer than Examples 7 to 10. This was considered to be because the protrusions of the AB agent contained in the front layers of the resin substrates caused defects in the inorganic oxide layers.

<Preparation Example 5>

20 g of polyacrylic acid aqueous solution (Aron A-10H manufactured by Toagosei Co., Ltd., 25-mass% solid concentration) having a number average molecular weight of 200,000 was diluted by adding 58.9 g of distilled water. Then, 0.44 g of aminopropyltrimethoxysilane (APTMS manufactured by Aldrich) was added, followed by stirring to form a uniform solution, thereby preparing a coating liquid C.

<Preparation Example 6>

100 g of water dispersion of zinc oxide fine particles (ZE143 manufactured by Sumitomo Osaka Cement Co., Ltd.) was mixed with 2 g of curing agent Liofol HAERTER UR 5889-21 (manufactured by Henkel), thereby obtaining a liquid mixture D for forming a metal particle layer.

<Example 11>

A resin substrate similar to one used in Example 4 was used.

The liquid mixture A of Preparation Example 3 was applied to the first surface of the resin substrate using a gravure printing machine to form a coating film, which was then passed through an oven at 100°C for 10 seconds for drying, thereby forming an underlayer with a thickness of 0.1 $\mu$m. Then, the coating liquid C of Preparation Example 5 was applied onto the underlayer as formed, using a gravure printing machine to form a coating, which was then passed through an oven at 80°C for 10 seconds for drying, thereby forming an oxygen barrier coating film. Then, the liquid mixture D of Preparation Example 6 was applied onto the oxygen barrier coating film as formed, using a gravure printing machine to form a coating, which was then passed through an oven at 50°C for 15 seconds for drying to form a metal particle layer with a thickness of 0.2 μm, thereby obtaining a gas barrier film of Example 11.

<Example 12>

A gas barrier film of Example 12 was obtained as in Example 11, except that the coating film was made thicker than Example 11 by increasing the application quantity of the coating liquid C.

<Example 13>

A gas barrier film of Example 13 was obtained as in Example 11, except that the coating film was made thinner than Example 11 by decreasing the application quantity of the coating liquid C.

<Example 14>

The liquid mixture A of Preparation Example 3 was applied to the first surface of a resin substrate similar to one used in Example 11, using a gravure printing machine to form a coating film, which was then passed through an oven at 100°C for 10 seconds for drying, thereby forming an underlayer with a thickness of 0.1 μm. Then, aluminum was evaporated with introduction of oxygen gas thereto to deposit aluminum oxide on the underlayer as formed, using a vacuum vapor deposition device operating according to an electron beam heating method, thereby forming an inorganic oxide layer with a thickness of 20 nm. Then, the coating liquid C of Preparation Example 5 was applied onto the inorganic oxide layer as formed, using a gravure printing machine to form a coating, which was then passed through an oven at 80°C for 10 seconds for drying, thereby forming an oxygen barrier coating film. Then, the liquid mixture D of Preparation Example 6 was applied onto the oxygen barrier coating film as formed, using a gravure printing machine to form a coating, which was then passed through an oven at 50°C for 15 seconds for drying to form a metal particle layer with a thickness of 0.2 μm, thereby obtaining a gas barrier film of Example 14.

<Example 15>

A gas barrier film of Example 15 was obtained as in Example 14, except that the coating film was made thicker than Example 14 by increasing the application quantity of the coating liquid C.

<Example 16>

A gas barrier film of Example 16 was obtained as in Example 14, except that the coating film was made thinner than Example 14 by decreasing the application quantity of the coating liquid C.

<Example 17>

Aluminum was evaporated with introduction of oxygen gas thereto to deposit aluminum oxide on the first surface of a resin substrate similar to one used in Example 11, using a vacuum vapor deposition device operating using an electron beam heating method, thereby forming an inorganic oxide layer with a thickness of 20 nm. Then, the coating liquid C of Preparation Example 5 was applied onto the inorganic oxide layer as formed, using a gravure printing machine to form a coating, which was then passed through an oven at 80°C for 10 seconds for drying, thereby forming an oxygen barrier coating film. Then, the liquid mixture D of Preparation Example 6 was applied onto the oxygen barrier coating film as formed, using a gravure printing machine to form a coating, which was then passed through an oven at 50°C for 15 seconds for drying to form a metal particle layer with a thickness of 0.2 μm, thereby obtaining a gas barrier film of Example 17.

<Comparative Example 9>

A resin substrate similar to one used in Comparative Example 3 was used.

The liquid mixture A of Preparation Example 3 was applied to the first surface of the resin substrate using a gravure printing machine to form a coating film, which was then passed through an oven at 100°C for 10 seconds for drying, thereby forming an underlayer with a thickness of 0.1 μm. Then, the coating liquid C of Preparation Example 5 was applied onto the underlayer as formed, using a gravure printing machine to form a coating, which was then passed through an oven at 80°C for 10 seconds for drying, thereby forming an oxygen barrier coating film. Then, the liquid mixture D of Preparation Example 6 was applied onto the oxygen barrier coating film as formed, using a gravure printing machine to form a coating, which was then passed through an oven at 50°C for 15 seconds for drying to form a metal particle layer with a thickness of 0.2 μm, thereby obtaining a gas barrier film of Comparative Example 9.

<Comparative Example 10>

A gas barrier film of Comparative Example 10 was obtained as in Comparative Example 9, except that the coating film was made thicker than Comparative Example 9 by increasing the application quantity of the coating liquid C.

<Comparative Example 11>

A gas barrier film of Comparative Example 11 was obtained as in Comparative Example 9, except that the coating film was made thinner than Comparative Example 9 by decreasing the application quantity of the coating liquid C.

<Comparative Example 12>

The liquid mixture A of Preparation Example 3 was applied to the first surface of a resin substrate similar to one used in Comparative Example 9, using a gravure printing machine to form a coating film, which was then passed through an oven at 100°C for 10 seconds for drying, thereby forming an underlayer with a thickness of 0.1 μm. Then, aluminum was evaporated with introduction of oxygen gas thereto to deposit aluminum oxide on the underlayer as formed, using a vacuum vapor deposition device operating according to an electron beam heating method, thereby forming an inorganic oxide layer with a thickness of 20 nm. Then, the coating liquid C of Preparation Example 5 was applied onto the inorganic oxide layer as formed, using a gravure printing machine to form a coating, which was then passed through an oven at 80°C for 10 seconds for drying, thereby forming an oxygen barrier coating film. Then, the liquid mixture D of Preparation Example 6 was applied onto the oxygen barrier coating film as formed, using a gravure printing machine to form a coating, which was then passed through an oven at 50°C for 15 seconds for drying to form a metal particle layer with a thickness of 0.2 μm, thereby obtaining a gas barrier film of Comparative Example 12.

<Comparative Example 13>

A gas barrier film of Comparative Example 13 was obtained as in Comparative Example 12, except that the coating film was made thicker than Comparative Example 12 by increasing the application quantity of the coating liquid C.

<Comparative Example 14>

Aluminum was evaporated with introduction of oxygen gas thereto to deposit aluminum oxide on the first surface of a resin substrate similar to one used in Comparative Example 9, using a vacuum vapor deposition device operating using an electron beam heating method, thereby forming an inorganic oxide layer with a thickness of 20 nm. Then, the coating liquid C of Preparation Example 5 was applied onto the inorganic oxide layer as formed, using a gravure printing machine to form a coating, which was then passed through an oven at 80°C for 10 seconds for drying, thereby forming an oxygen barrier coating film. Then, the liquid mixture D of Preparation Example 6 was applied onto the oxygen barrier coating film as formed, using a gravure printing machine to form a coating, which was then passed through an oven at 50°C for 15 seconds for drying to form a metal particle layer with a thickness of 0.2 μm, thereby obtaining a gas barrier film of Comparative Example 14.

The gas barrier films of Examples 7 to 17 and Comparative Examples 6 to 14 were examined assuming that they would be used as packaging materials for boiling and retort treatment.

<Preparation of packaging material for boiling and retort treatment>

The gas barrier films of Examples 7 to 17 and Comparative Examples 6 to 14 were each bonded to CPP (polypropylene film) by dry lamination using an adhesive to prepare a laminate film having a structure of gas barrier film / adhesive / CPP as a packaging material for boiling and retort treatment. For dry lamination, Multicoater TM-MC manufactured by HIRANO TECSEED Co.,Ltd was used. The adhesive was disposed on the oxygen barrier coating. The adhesive used was Takelac A620 (base resin) / Takenate A65 (curing agent), a two-liquid curing type adhesive manufactured by Mitsui Chemicals Polyurethanes Inc. The CPP used was Torayfan ZK93FM (60 μm), a polypropylene film manufactured by Toray Advanced Film Co., Ltd. The obtained laminate films were cured at 40°C for three days.

The laminate films of the examples and the comparative examples were heat sterilized in hot water at 120°C for 30 minutes and evaluated as to oxygen barrier properties and water vapor barrier properties through the same procedure as above.

Table 5 shows the results of hot water treatment of Examples 7 to 17, and Table 6 shows the results of hot water treatment of Comparative Examples 6 to 14.

Since the laminate films of Examples 11 to 17 and Comparative Examples 9 to 14 are configured to exhibit barrier properties by being subjected to hot water treatment, only the data after the hot water treatment are shown. In table 5 and 6, in row 3 the disclosure Front layer AB agent should be Back layer AB agent

[Table 5]

| | | Example 7 | Example 8 | Example 9 | Example 10 | Example 11 | Example 12 | Example 13 | Example 14 | Example 15 | Example 16 | Example 17 |
|---|---|---|---|---|---|---|---|---|---|---|---|---|
| Front layer AB agent | Addition amount (ppm) | 0 | 0 | 0 | 0 | 0 | 0 | 0 | 0 | 0 | 0 | 0 |
| | Material | - | - | - | - | - | - | - | - | - | - | - |
| | Average particle size ($\mu$m) | - | - | - | - | - | - | - | - | - | - | - |
| Front layer AB agent | Addition amount (ppm) | 2,000 | 2,000 | 2,000 | 2,000 | 2,000 | 2,000 | 2,000 | 2,000 | 2,000 | 2,000 | 2,000 |
| | Material | Silica | Silica | Silica | Silica | Silica | Silica | Silica | Silica | Silica | Silica | Silica |
| | Average particle size ($\mu$m) | 4 | 4 | 4 | 4 | 4 | 4 | 4 | 4 | 4 | 4 | 4 |
| Underlayer | | Provided | Provided | Provided | Not provided | Provided | Provided | Provided | Provided | Provided | Provided | Not provided |
| Inorganic oxide layer | | Aluminum oxide | Aluminum oxide | Aluminum oxide | Aluminum oxide | - | - | - | Aluminum oxide | Aluminum oxide | Aluminum oxide | **Aluminum** oxide |
| Coating film | Thickness (um) | 0.35 | 0.7 | 0.2 | 0.35 | 0.3 | 0.5 | 0.2 | 0.3 | 0.5 | 0.2 | 0.3 |
| Oxygen barrier properties (cc/(m$^2$-day-atm)) | | 1.5 | 1.3 | 1.9 | 2.1 | 0.5 | 0.4 | 0.6 | 0.2 | 0.2 | 0.3 | 0.4 |
| Water vapor barrier properties (g/(m$^2$-day)) | | 1.5 | 1.4 | 1.7 | 2.2 | 4.5 | 4.4 | 4.5 | 1.6 | 1.4 | 1.9 | 2.0 |

[Table 6]

| | | Comp. Ex. 6 | Comp. Ex. 7 | Comp. Ex. 8 | Comp. Ex. 9 | Comp. Ex. 10 | Comp. Ex. 11 | Comp. Ex. 12 | Comp. Ex. 13 | Comp. Ex. 14 |
|---|---|---|---|---|---|---|---|---|---|---|
| Front layer AB agent | Addition amount (ppm) | 1,500 | 1,500 | 1,500 | 1,500 | 1,500 | 1,500 | 1,500 | 1,500 | 1,500 |
| | Material | PMMA | PMMA | PMMA | PMMA | PMMA | PMMA | PMMA | PMMA | PMMA |
| | Average particle size ($\mu$m) | 4 | 4 | 4 | 4 | 4 | 4 | 4 | 4 | 4 |
| Front layer AB agent | Addition amount (ppm) | 2,000 | 2,000 | 2,000 | 2,000 | 2,000 | 2,000 | 2,000 | 2,000 | 2,000 |
| | Material | Silica | Silica | Silica | Silica | Silica | Silica | Silica | Silica | Silica |
| | Average particle size ($\mu$m) | 4 | 4 | 4 | 4 | 4 | 4 | 4 | 4 | 4 |
| Underlayer | | Provided | Provided | Not provided | Provided | Provided | Provided | Provided | Provided | Not provided |
| Inorganic oxide layer | | Aluminum oxide | Aluminum oxide | Aluminum oxide | - | - | - | Aluminum oxide | Aluminum oxide | Aluminum oxide |
| Coating film | Thickness ($\mu$m) | 0.35 | 1.0 | 0.35 | 0.3 | 0.8 | 0.2 | 0.3 | 0.8 | 0.3 |
| Oxygen barrier properties (cc/(m$^2$-day-atm)) | | 5.8 | 4.3 | 8.6 | 3.4 | 2.6 | 6.3 | 2.8 | 2.2 | 3.5 |
| Water vapor barrier properties (g/(m$^2$-day)) | | 1.7 | 1.6 | 2.1 | 4.5 | 4.4 | 4.4 | 1.8 | 1.8 | 2.0 |

As shown in Table 5, the laminate films using gas barrier films of the examples all exhibited good oxygen barrier properties after heat sterilization. In particular, Examples 7, 11 and 14 exhibited oxygen barrier properties equivalent to respective Examples 8, 12 and 15, although the coating films of the former were thinner than the latter.

The laminate films using the gas barrier films of the comparative examples all exhibited oxygen barrier properties after heat sterilization poorer than those of the laminate films using the gas barrier films of the examples. This was considered to be because the front layers of the resin substrates contained AB agents.

The gas barrier film of Comparative Example 10 was improved in oxygen barrier properties after being heat sterilized compared to Comparative Example 9 due to having a coating film thicker than Comparative Example 9, but the oxygen barrier properties were poorer than Examples 11 to 13.

The gas barrier film of Comparative Example 11 was deteriorated in oxygen barrier properties after being heat sterilized compared to Comparative Example 9 due to having a coating film thinner than Comparative Example 9, and the oxygen barrier properties were significantly poorer than Examples 11 to 13.

[Industrial Applicability]

The gas barrier film of the present invention stably exhibits good barrier properties even in a high humidity atmosphere and has sufficient adhesion strength and film cohesive strength as a packaging material. Furthermore, the oxygen barrier coating film with a reduced thickness can contribute to reducing material cost.

The gas barrier film of the present invention can be suitably used, for example, as a packaging material. Use of the gas barrier film of the present invention as a packaging material can contribute to enhancing retention of quality of the contents.

[Reference Signs List]

| | |
|---|---|
| 1, 20 | Resin substrate |
| 1a, 20a | First surface |
| 1b, 20b | Second surface |
| 4, 24 | Base layer |
| 5, 25 | Coating film (Oxygen barrier coating film) |
| 6, 26 | Anti-blocking agent |
| 10, 200 | Gas barrier film |
| 27 | Underlayer |
| 28 | Inorganic oxide layer |

**Claims**

1. A gas barrier film comprising

   a resin substrate having a first surface, wherein the resin substrate includes two or more resin layers including a base layer, and, of the two or more resin layers, a resin layer forming the first surface does not contain an anti-blocking agent and a resin layer forming a second surface facing away from the first surface contains an anti-blocking agent; and
   an oxygen barrier coating film (i) having a thickness in the range of 0.2 $\mu$m to 5 $\mu$m in contact with the first surface of the resin substrate, and formed of a coating agent that contains a water-soluble polymer and an inorganic laminar mineral, wherein the water-soluble polymer is one or more selected from the group consisting of polyvinyl alcohol resins, other vinyl polymers, cellulose derivatives, starches, copolymerized polyester having a polar group, urethane polymers, and functional group modified polymers thereof in which carboxyl groups are modified, wherein the coating agent preferably further contains an aqueous polyurethane resin and/or a curing agent, wherein the thickness is measured using a scanning electron microscope; or
   an oxygen barrier coating film (ii) having a thickness in the range of 0.05 $\mu$m to 5 $\mu$m formed on the first surface of the resin substrate, wherein an inorganic oxide layer is provided between the resin substrate and the oxygen barrier coating film, wherein the thickness is measured using a scanning electron microscope, and the inorganic oxide layer is aluminum oxide or silicon oxide.

2. The gas barrier film according to claim 1, wherein the gas barrier film comprises the oxygen barrier coating film (i) and the base layer has a thickness greater than a particle size of the anti-blocking agent.

3. The gas barrier film according to claim 1 or 2, wherein the resin substrate is a polyolefin resin substrate.

4. The gas barrier film according to any one of claims 1 to 3, wherein the oxygen barrier coating film (i) has a thickness in a range of 0.2 $\mu$m to 0.7 $\mu$m.

5. The gas barrier film according to of claim 1 or 3, wherein the gas barrier film has the oxygen barrier coating film (ii);

the inorganic oxide layer is provided between the resin substrate and the oxygen barrier coating film; and
the inorganic oxide layer has a thickness in a range of 1 nm to 200 nm.

6. The gas barrier film according to any one of claims 1, 3 and 5, wherein the gas barrier film has the oxygen barrier coating film (ii), wherein the oxygen barrier coating film (ii) has a thickness in a range of 0.05 $\mu$m to 1 $\mu$m.

7. The gas barrier film according to any one of claims 1, 3 and 5 to 6, wherein the gas barrier film has the oxygen barrier coating film (ii), wherein the oxygen barrier coating film (ii) contains a water-soluble polymer and at least one of a metal alkoxide, a hydrolysate of a metal alkoxide hydrolysate, and a reaction product of a metal alkoxide, wherein the water-soluble polymer is selected from the group consisting of polyvinyl alcohol polymer, a polysaccharide polymer, or an acrylic polyol polymer.

8. The gas barrier film according to claim 7, wherein the oxygen barrier coating film (ii) further contains at least one of a silane coupling agent and a reaction product of a silane coupling agent.

9. The gas barrier film according to any one of claims 1, 3 and 5 to 8, wherein the gas barrier film has the oxygen barrier coating film (ii), wherein the oxygen barrier coating film (ii) contains a polyvalent metal salt of a polycarboxylic acid that is a reaction product of a carboxyl group of a polycarboxylic acid polymer and a polyvalent metal compound.


**Patentansprüche**

1. Gasbarrierefilm, umfassend:

ein Harzsubstrat mit einer ersten Oberfläche, wobei das Harzsubstrat zwei oder mehr Harzschichten, eine Basisschicht eingeschlossen, einschließt, und von den zwei oder mehr Harzschichten eine Harzschicht, die die erste Oberfläche bildet, kein Antiblockmittel enthält und eine Harzschicht, die eine zweite Oberfläche bildet, die von der ersten Oberfläche weg weist, ein Antiblockmittel enthält; und
einen Sauerstoffbarriere-Beschichtungsfilm (i) mit einer Dicke im Bereich von 0,2 $\mu$m bis 5 $\mu$m in Kontakt mit der ersten Oberfläche des Harzsubstrats, der gebildet ist aus einem Beschichtungsmittel, das ein wasserlösliches Polymer und ein anorganisches lamellares Mineral enthält, wobei das wasserlösliche Polymer eines oder mehrere ist, ausgewählt aus der Gruppe, bestehend aus Polyvinylalkoholharzen, anderen Vinylpolymeren, Cellulosederivaten, Stärken, copolymerisiertem Polyester mit einer polaren Gruppe, Urethanpolymeren und funktionelle Gruppe-modifizierten Polymeren davon, in denen Carboxylgruppen modifiziert sind, wobei das Beschichtungsmittel vorzugsweise ferner ein wässriges Polyurethanharz und/oder ein Härtungsmittel enthält, wobei die Dicke unter Verwendung eines Rasterelektronenmikroskops gemessen wurde; oder
einen Sauerstoffbarriere-Beschichtungsfilm (ii) mit einer Dicke im Bereich von 0,05 $\mu$m bis 5 $\mu$m, der auf der ersten Oberfläche des Harzsubstrats gebildet ist, wobei eine anorganische Oxidschicht zwischen dem Harzsubstrat und dem Sauerstoffbarriere-Beschichtungsfilm vorliegt, wobei die Dicke unter Verwendung eines Rasterelektronenmikroskops gemessen wurde und die anorganische Oxidschicht Aluminiumoxid oder Siliciumoxid ist.

2. Gasbarrierefilm gemäß Anspruch 1, wobei der Gasbarrierefilm den Sauerstoffbarriere-Beschichtungsfilm (i) umfasst und die Basisschicht eine Dicke größer als eine Partikelgröße des Antiblockmittels hat.

3. Gasbarrierefilm gemäß Anspruch 1 oder 2, in dem das Harzsubstrat ein Polyolefinharzsubstrat ist.

4. Gasbarrierefilm gemäß mindestens einem der Ansprüche 1 bis 3, in dem der Sauerstoffbarriere-Beschichtungsfilm (i) eine Dicke in einem Bereich von 0,2 $\mu$m bis 0,7 $\mu$m hat.

5. Gasbarrierefilm gemäß Anspruch 1 oder 3, wobei der Gasbarrierefilm den Sauerstoffbarriere-Beschichtungsfilm (ii) aufweist;

die anorganische Oxidschicht zwischen dem Harzsubstrat und dem Sauerstoffbarriere-Beschichtungsfilm vorliegt; und

die anorganische Oxidschicht eine Dicke in einem Bereich von 1 nm bis 200 nm hat.

6. Gasbarrierefilm gemäß mindestens einem der Ansprüche 1, 3 und 5, wobei der Gasbarrierefilm den Sauerstoffbarriere-Beschichtungsfilm (ii) aufweist, wobei der Sauerstoffbarriere-Beschichtungsfilm (ii) eine Dicke in einem Bereich von 0,05 µm bis 1 µm hat.

7. Gasbarrierefilm gemäß mindestens einem der Ansprüche 1, 3 und 5 bis 6, wobei der Gasbarrierefilm den Sauerstoffbarriere-Beschichtungsfilm (ii) aufweist, wobei der Sauerstoffbarriere-Beschichtungsfilm (ii) ein wasserlösliches Polymer und mindestens einen Vertreter von einem Metallalkoxid, einem Hydrolysat eines Metallalkoxidhydrolysats und einem Reaktionsprodukt eines Metallalkoxids enthält, wobei das wasserlösliche Polymer ausgewählt ist aus der Gruppe, bestehend aus Polyvinylalkoholpolymer, einem Polysacharidpolymer oder einem Acrylpolyolpolymer.

8. Gasbarrierefilm gemäß Anspruch 7, in dem der Sauerstoffbarriere-Beschichtungsfilm (ii) ferner mindestens einen Vertreter von einem Silanhaftvermittler und einem Reaktionsprodukt eines Silanhaftvermittlers enthält.

9. Gasbarrierefilm gemäß mindestens einem der Ansprüche 1, 3 und 5 bis 8, wobei der Gasbarrierefilm den Sauerstoffbarriere-Beschichtungsfilm (ii) aufweist, wobei der Sauerstoffbarriere-Beschichtungsfilm (ii) ein polyvalentes Metallsalz einer Polycarbonsäure, das ein Reaktionsprodukt einer Carboxylgruppe eines Polycarbonsäurepolymers und einer polyvalenten Metallverbindung ist, enthält.

**Revendications**

1. Un film barrière aux gaz comprenant

un substrat en résine ayant une première surface, dans lequel le substrat en résine comprend deux ou plusieurs couches de résine comprenant une couche de base, et, parmi les deux ou plusieurs couches de résine, une couche de résine formant la première surface ne contient pas d'agent anti-blocage et une couche de résine formant une deuxième surface opposée à la première surface contient un agent anti-blocage ; et
un film de revêtement barrière à l'oxygène (i) ayant une épaisseur dans le domaine de 0,2 µm à 5 µm en contact avec la première surface du substrat en résine, et formé d'un agent de revêtement qui contient un polymère hydrosoluble et un minéral laminaire inorganique, dans lequel le polymère hydrosoluble est un ou plusieurs choisis parmi le groupe constitué des résines d'alcool polyvinylique, d'autres polymères vinyliques, les dérivés de cellulose, les amidons, les polyesters copolymérisés ayant un groupe polaire, les polymères d'uréthane et les polymères modifiés par des groupes fonctionnels dans lesquels les groupes carboxyle sont modifiés, dans lequel l'agent de revêtement contient de préférence en outre une résine polyuréthane aqueuse et/ou un agent de durcissement, dans lequel l'épaisseur est mesurée à l'aide d'un microscope électronique à balayage ; ou
un film de revêtement barrière à l'oxygène (ii) ayant une épaisseur dans le domaine de 0,05 µm à 5 µm formé sur la première surface du substrat en résine, dans lequel une couche d'oxyde inorganique est prévue entre le substrat en résine et le film de revêtement barrière à l'oxygène, dans lequel l'épaisseur est mesurée à l'aide d'un microscope électronique à balayage, et la couche d'oxyde inorganique est de l'oxyde d'aluminium ou de l'oxyde de silicium.

2. Le film barrière aux gaz selon la revendication 1, dans lequel le film barrière aux gaz comprend le film de revêtement barrière à l'oxygène (i) et la couche de base a une épaisseur supérieure à la taille des particules de l'agent anti-blocage.

3. Le film barrière aux gaz selon la revendication 1 ou 2, dans lequel le substrat en résine est un substrat en résine polyoléfine.

4. Le film barrière aux gaz selon l'une quelconque des revendications 1 à 3, dans lequel le film de revêtement barrière à l'oxygène (i) a une épaisseur dans le domaine de 0,2 µm à 0,7 µm.

5. Le film barrière aux gaz selon la revendication 1 ou 3, dans lequel le film barrière aux gaz comporte le film de revêtement barrière à l'oxygène (ii) ;

la couche d'oxyde inorganique est disposée entre le substrat en résine et le film de revêtement barrière à l'oxygène ; et

la couche d'oxyde inorganique a une épaisseur dans le domaine de 1 nm à 200 nm.

6. Le film barrière aux gaz selon l'une quelconque des revendications 1, 3 et 5, dans lequel le film barrière aux gaz comporte le film de revêtement barrière à l'oxygène (ii), dans lequel le film de revêtement barrière à l'oxygène (ii) a une épaisseur dans le domaine de 0,05 $\mu$m à 1 $\mu$m.

7. Le film barrière aux gaz selon l'une quelconque des revendications 1, 3 et 5 à 6, dans lequel le film barrière aux gaz comporte le film de revêtement barrière à l'oxygène (ii), dans lequel le film de revêtement barrière à l'oxygène (ii) contient un polymère hydrosoluble et au moins l'un parmi un alcoolate métallique, un hydrolysat d'un hydrolysat d'alkoxyde métallique et un produit de réaction d'un alcoxyde métallique, dans lequel le polymère hydrosoluble est choisi dans le groupe constitué par un polymère d'alcool polyvinylique, un polymère polysaccharidique ou un polymère polyol acrylique.

8. Le film barrière aux gaz selon la revendication 7, dans lequel le film de revêtement barrière à l'oxygène (ii) contient en outre au moins un agent de couplage silane et un produit de réaction d'un agent de couplage silane.

9. Le film barrière aux gaz selon l'une quelconque des revendications 1, 3 et 5 à 8, dans lequel le film barrière aux gaz comporte le film de revêtement barrière à l'oxygène (ii), dans lequel le film de revêtement barrière à l'oxygène (ii) contient un sel métallique polyvalent d'un acide polycarboxylique qui est un produit de réaction d'un groupe carboxyle d'un polymère d'acide polycarboxylique et d'un composé métallique polyvalent.

# FIG.1

# FIG.2

FIG.3

2.0kV 5.0mm x7.00k SE(L)                              5.00um

**REFERENCES CITED IN THE DESCRIPTION**

**Patent documents cited in the description**

- JP 6176239 B
- JP 2000254994 A
- JP 4373797 B
- JP 2006159801 B